# EUROPEAN PATENT APPLICATION

(11) **EP 4 539 584 A1**
(43) Date of publication of application: **16.04.2025**
(21) Application number: 22949807.6
(22) Date of filing: 06.07.2022
(51) Int. Cl.: H04W 76/00

(54) **COMMUNICATION METHOD AND APPARATUS**

(71) Applicant: Huawei Technologies Co., Ltd., Shenzhen, Guangdong 518129 (CN)
(72) Inventor: LIU, Zhe, Shenzhen, Guangdong 518129 (CN); PENG, Chenghui, Shenzhen, Guangdong 518129 (CN); XING, Weijun, Shenzhen, Guangdong 518129 (CN); WU, Shaoyun, Shenzhen, Guangdong 518129 (CN); WANG, Fei, Shenzhen, Guangdong 518129 (CN); WANG, Jun, Shenzhen, Guangdong 518129 (CN)
(74) Representative: Maiwald GmbH
(86) International application number: PCT/CN2022/104234
(87) International publication number: WO 2024/007221

(57) **Abstract**

This application provides a communication method and apparatus, to resolve a problem that a wireless communication service and a computing service can be provided for a user only when a delay is large, thereby improving user experience. The communication method and apparatus may be used in a 4G system, a 5G system, and a future communication system such as a 6G system. The method includes: A convergence orchestration unit obtains service request information, sends computing requirement information to a computing execution control unit, and sends transmission requirement information to a computing transmission control unit. The service request information is for requesting a first computing service, the computing requirement information indicates a computing requirement corresponding to the first computing service, and the transmission requirement information indicates a communication requirement corresponding to the first computing service.

## Description

### TECHNICAL FIELD

This application relates to the communication field, and in particular, to a communication method and apparatus.

### BACKGROUND

Convergence of mobile communication networks and computing capabilities can promote generation and development of intelligent applications in the future. In a current scenario in which a mobile communication network and a computing capability are converged, a wireless communication service needs to be provided for a user via the mobile communication network system, and a computing service such as an artificial intelligence (artificial intelligence, AI) service needs to be provided for the user by using a computing system.

However, the mobile communication network system and the computing system are independent of each other in terms of a logical architecture and a control mechanism. The mobile communication network system and the computing system need to exchange information (for example, information about the mobile communication network or computing capability information) through an open interface to provide the wireless communication service and the computing service for the user, and an interaction delay is large. Consequently, a large delay is required to provide a wireless communication service and a computing service for a user, reducing user experience.

### SUMMARY

Embodiments of this application provide a communication method and apparatus, to resolve a problem that a wireless communication service and a computing service can be provided for a user only when a delay is large, thereby improving user experience.

To achieve the foregoing objective, this application uses the following technical solutions.

According to a first aspect, a communication method is provided. The communication method includes: A convergence orchestration unit obtains service request information, the convergence orchestration unit sends computing requirement information to a computing execution control unit, and the convergence orchestration unit sends transmission requirement information to a computing transmission control unit. The service request information is for requesting a first computing service, the computing requirement information indicates a computing requirement corresponding to the first computing service, and the transmission requirement information indicates a communication requirement corresponding to the first computing service.

Based on the method provided in the first aspect, the convergence orchestration unit obtains the service request information for requesting the first computing service, sends the computing requirement corresponding to the first computing service to the computing execution control unit, and sends the communication requirement corresponding to the first computing service to the computing transmission control unit. The computing execution control unit sends a computing parameter to a computing unit, the computing transmission control unit sends a transmission parameter to the computing unit, and the computing unit performs computing processing based on the computing parameter and the transmission parameter. In this way, information is directly exchanged in computing control and communication control processes, for example, the convergence orchestration unit and the computing execution control unit directly exchange a computing requirement or the like, and information does not need to be exchanged through an open interface. An interaction delay is small. This can resolve a problem that a wireless communication service and a computing service can be provided for a user only when a delay is large, thereby improving user experience.

In a possible design, the communication method provided in the first aspect may further include: The convergence orchestration unit receives computing scheduling information from the computing execution control unit; and the convergence orchestration unit determines the transmission requirement information based on a service level requirement of the first computing service and the computing scheduling information. The computing scheduling information includes computing parameter configuration information separately corresponding to at least one computing unit and an identifier of the at least one computing unit. In this way, the convergence orchestration unit can accurately determine the transmission requirement information based on an overall requirement (the service level requirement of the first computing service) and a computing scheduling result (the computing scheduling information).

In a possible design, the computing parameter configuration information may include a configuration of a computing resource and/or a configuration of computing quality of service, the configuration of the computing resource may include a size of the computing resource and/or a storage size, and the configuration of the computing quality of service may include one or more of the following: a computing processing mode, computing processing precision, and computing processing time. The computing parameter configuration information may meet a computing requirement, and the computing unit may perform computing based on the computing parameter configuration information.

In a possible design, any one of the at least one computing unit may be deployed on a terminal device, an access network device, or a core network.

In a possible design, the convergence orchestration unit is a core network element.

In a possible design, the computing execution control unit may be a computing management function or a computing resource control function, and the computing transmission control unit may be a session management function or a radio resource control function.

In a possible design, a convergence anchor may include the computing execution control unit and the computing transmission control unit, and the convergence anchor may be a core network element.

In a possible design, a convergence scheduling unit may include the computing execution control unit and the computing transmission control unit, and the convergence scheduling unit may be an access network device, or the convergence scheduling unit may be deployed on an access network device.

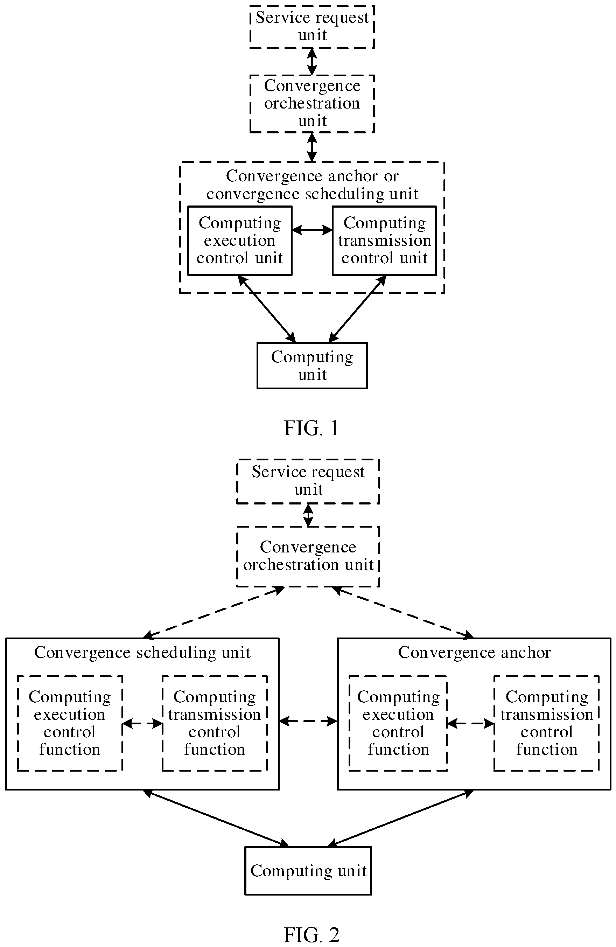

In this way, the convergence scheduling unit, the convergence anchor, the convergence orchestration unit, the computing unit, the computing execution control unit, and the computing transmission control unit can be deployed in a mobile communication system. For details, refer to the following descriptions in FIG. 1 and FIG. 2.

In a possible design, the computing requirement information may include a computing resource requirement and/or a computing quality of service requirement, and the computing quality of service requirement may include one or more of the following: a computing processing mode requirement, a computing processing precision requirement, and a computing processing time requirement.

In a possible design, the transmission requirement information may include a communication resource requirement and/or a communication quality of service requirement, and the communication quality of service requirement may include a bandwidth requirement and/or a delay requirement.

According to a second aspect, a communication method is provided. The communication method includes: A computing execution control unit obtains computing requirement information; and the computing execution control unit sends computing parameter configuration information to a computing unit. The computing requirement information indicates a computing requirement corresponding to a first computing service, and the computing parameter configuration information indicates a computing parameter of the computing unit.

In a possible design, that a computing execution control unit obtains computing requirement information may include: The computing execution control unit receives the computing requirement information from a convergence orchestration unit; or the computing execution control unit receives the computing requirement information from a computing transmission control unit. In this way, the computing requirement information can come from the convergence orchestration unit or the computing transmission control unit.

Optionally, the computing execution control unit and the computing transmission control unit may interact with each other through a first logical interface, and the first logical interface uses a RESTful API interface specification. For example, the computing execution control unit receives the computing requirement information from the computing transmission control unit through the first logical interface.

In a possible design, that a computing execution control unit obtains computing requirement information may include: The computing execution control unit receives transmission indication information from a computing transmission control unit; and the computing execution control unit determines the computing requirement information based on the transmission indication information and first mapping information. The transmission indication information may indicate a current communication parameter of the computing unit, and the first mapping information may indicate a correspondence between a computing parameter and a communication parameter.

In this way, the computing execution control unit can determine, based on the current communication parameter of the computing unit indicated by the transmission indication information and the first mapping information, a computing parameter corresponding to the current communication parameter of the computing unit, and use the computing parameter corresponding to the current communication parameter as the computing requirement information. For example, the computing execution control unit may maintain the first mapping information, and the first mapping information may be preconfigured.

In a possible design, the computing execution control unit may be a computing management function or a computing resource control function, and the computing transmission control unit may be a session management function or a radio resource control function.

In a possible design, a convergence anchor may include the computing execution control unit and the computing transmission control unit, and the convergence anchor may be a core network element.

In a possible design, a convergence scheduling unit may include the computing execution control unit and the computing transmission control unit, and the convergence scheduling unit may be an access network device, or the convergence scheduling unit may be deployed on an access network device.

In a possible design, the computing unit may be deployed on a terminal device, an access network device, or a core network.

In a possible design, the convergence orchestration unit is a core network element.

In a possible design, the computing parameter configuration information may be determined by the computing execution control unit based on the computing requirement information and computing capability information, and the computing capability information may include a computing capability of one or more computing units.

In this way, the computing execution control unit can select at least one computing unit from the one or more computing units based on the computing requirement information and the computing capability of the one or more computing units, and determine computing parameter configuration information separately corresponding to the at least one computing unit. The computing parameter configuration information separately corresponding to the at least one computing unit can meet or implement the computing requirement corresponding to the first computing service. The one or more computing units may be all or a part of computing units managed (or controlled) by the computing execution control unit.

In a possible design, the communication method provided in the second aspect may further include: The computing execution control unit sends computing scheduling information to the convergence orchestration unit. The computing scheduling information may include the computing parameter configuration information separately corresponding to the at least one computing unit and an identifier of the at least one computing unit. In this way, the at least one computing unit can be selected from the one or more computing units, and the one or more computing units may include the at least one computing unit.

In a possible design, the computing requirement information may include a computing resource requirement and/or a computing quality of service requirement, and the computing quality of service requirement may include one or more of the following: a computing processing mode requirement, a computing processing precision requirement, and a computing processing time requirement.

In a possible design, the computing parameter configuration information may include a configuration of a computing resource and/or a configuration of computing quality of service, the configuration of the computing resource may include a size of the computing resource and/or a storage size, and the configuration of the computing quality of service may include one or more of the following: a computing processing mode, computing processing precision, and computing processing time.

In addition, for technical effects of the communication method according to the second aspect, refer to the technical effects of the communication method according to any possible implementation of the first aspect. Details are not described herein again.

According to a third aspect, a communication method is provided. The communication method includes: A computing transmission control unit obtains transmission requirement information, and the computing transmission control unit sends transmission parameter configuration information to a computing unit. The transmission requirement information indicates a communication requirement corresponding to a first computing service, and the transmission parameter configuration information indicates a communication parameter of the computing unit.

In a possible design, that a computing transmission control unit obtains transmission requirement information may include: The computing transmission control unit receives the transmission requirement information from a convergence orchestration unit; or the computing transmission control unit receives the transmission requirement information from a computing execution control unit.

Optionally, the computing execution control unit and the computing transmission control unit may interact with each other through a first logical interface, and the first logical interface uses a RESTful API interface specification. For example, the computing transmission control unit interacts with the computing execution control unit through the first logical interface, and receives the transmission requirement information from the computing execution control unit.

In a possible design, that a computing transmission control unit obtains transmission requirement information may include: The computing transmission control unit receives computing indication information from a computing execution control unit; and the computing transmission control unit determines the transmission requirement information based on the computing indication information and first mapping information. The computing indication information indicates a current computing parameter of the computing unit, and the first mapping information indicates a correspondence between a computing parameter and a communication parameter.

In this way, the computing transmission control unit can determine, based on the current computing parameter of the computing unit indicated by the computing indication information and the first mapping information, a communication parameter corresponding to the current computing parameter of the computing unit, and use the communication parameter corresponding to the current computing parameter as the transmission requirement information. For example, the computing transmission control unit may maintain the first mapping information, and the first mapping information may be preconfigured.

In a possible design, that a computing transmission control unit obtains transmission requirement information may include: The computing transmission control unit receives computing indication information from a computing execution control unit; and the computing transmission control unit determines the transmission requirement information based on the computing indication information, first mapping information, and second mapping information. The computing indication information may indicate to request the first computing service, the first mapping information indicates a correspondence between a computing parameter and a communication parameter, and the second mapping information indicates a correspondence between a computing service and a computing parameter.

In this way, the computing indication information indicates to request the first computing service, and the computing transmission control unit can determine, based on the first computing service and the second mapping information, a computing parameter corresponding to the first computing service, determine, based on the first mapping information, a communication parameter corresponding to the computing parameter, and use the communication parameter as the transmission requirement information.

In a possible design, the computing execution control unit may be a computing management function or a computing resource control function, and the computing transmission control unit may be a session management function or a radio resource control function.

In a possible design, a convergence anchor may include the computing execution control unit and the computing transmission control unit, and the convergence anchor may be a core network element.

In a possible design, a convergence scheduling unit may include the computing execution control unit and the computing transmission control unit, and the convergence scheduling unit may be an access network device, or the convergence scheduling unit may be deployed on an access network device.

In a possible design, the computing unit may be deployed on a terminal device, an access network device, or a core network.

In a possible design, the convergence orchestration unit is a core network element.

In a possible design, the transmission parameter configuration information may be determined by the computing transmission control unit based on the transmission requirement information and transmission capability information, and the transmission capability information includes a communication capability of one or more computing units.

In this way, the computing transmission control unit can select at least one computing unit from the one or more computing units based on the transmission requirement information and the communication capability of the one or more computing units, and determine transmission parameter configuration information separately corresponding to the at least one computing unit. The transmission parameter configuration information separately corresponding to the at least one computing unit can meet the communication requirement corresponding to the first computing service or a current computing status of the computing unit.

In a possible design, the transmission requirement information may include a communication resource requirement and/or a communication quality of service requirement, and the communication quality of service requirement may include a bandwidth requirement and/or a delay requirement.

In a possible design, the transmission parameter configuration information may include a configuration of a communication resource and/or a configuration of communication quality of service, the configuration of the communication resource may include a size of the communication resource, and the configuration of the communication quality of service may include bandwidth and/or a delay.

In addition, for technical effects of the communication method according to the third aspect, refer to the technical effects of the communication method according to any possible implementation of the first aspect. Details are not described herein again.

According to a fourth aspect, a communication method is provided. The communication method includes: A computing execution control unit obtains computing indication information; and the computing execution control unit sends transmission requirement information or computing indication information to a computing transmission control unit. The computing indication information indicates to request a first computing service, or indicates a current computing parameter of a computing unit, and the transmission requirement information indicates a communication requirement corresponding to the computing indication information.

Based on the communication method provided in the fourth aspect, the computing execution control unit may obtain the computing indication information, where the computing indication information indicates the current computing parameter of the computing unit or indicates to request the first computing service. The computing execution control unit and the computing transmission control unit collaborate to obtain transmission parameter configuration information corresponding to the computing indication information, and send the transmission parameter configuration information to the computing unit, so that the computing unit can perform computing processing based on the transmission parameter configuration information. In this way, information is directly exchanged in computing control and communication control processes, for example, the computing transmission control unit and the computing unit directly exchange the transmission parameter configuration information or the like, and information does not need to be exchanged through an open interface. An interaction delay is small. This can resolve a problem that a wireless communication service and a computing service can be provided for a user only when a delay is large, thereby improving user experience.

In a possible design, the computing indication information indicates the current computing parameter of the computing unit, the transmission requirement information is determined by the computing execution control unit based on the computing indication information and first mapping information, where the first mapping information may indicate a correspondence between a computing parameter and a communication parameter.

In this way, the computing execution control unit can determine, based on the current computing parameter of the computing unit indicated by the computing indication information and the first mapping information, a communication parameter corresponding to the current computing parameter of the computing unit, and use the communication parameter corresponding to the current computing parameter as the transmission requirement information.

In a possible design, the computing indication information indicates to request the first computing service, the transmission requirement information is determined by the computing execution control unit based on the computing indication information, first mapping information, and second mapping information, where the first mapping information may indicate a correspondence between a computing parameter and a communication parameter, and the second mapping information may indicate a correspondence between a computing service and a computing parameter.

In this way, the computing execution control unit can determine, based on the first computing service and the second mapping information, a computing parameter corresponding to the first computing service, determine, based on the first mapping information, a communication parameter corresponding to the computing parameter, and use the communication parameter as the transmission requirement information.

In a possible design, the computing unit is deployed on a terminal device, an access network device, or a core network.

In a possible design, the computing execution control unit is a computing management function or a computing resource control function, and the computing transmission control unit is a session management function or a radio resource control function.

In a possible design, a convergence anchor may include the computing execution control unit and the computing transmission control unit, and the convergence anchor is a core network element.

In a possible design, a convergence scheduling unit may include the computing execution control unit and the computing transmission control unit, and the convergence scheduling unit is an access network device, or the convergence scheduling unit may be deployed on an access network device.

In a possible design, the communication method provided in the fourth aspect may further include: The computing execution control unit sends computing parameter configuration information to the computing unit. The computing parameter configuration information may indicate a computing parameter of the computing unit.

In a possible design, the computing indication information indicates to request the first computing service, the computing parameter configuration information is determined by the computing execution control unit based on the computing indication information, second mapping information, and computing capability information, where the second mapping information may indicate a correspondence between a computing service and a computing parameter.

In this way, the computing execution control unit can determine, based on the first computing service and the correspondence between a computing service and a computing parameter, a computing parameter corresponding to the first computing service, to obtain the computing requirement information, and determine the computing parameter configuration information based on the computing requirement information and the computing capability information.

Optionally, if the computing indication information indicates the current computing parameter of the computing unit, the computing execution control unit may send computing parameter configuration information to the computing unit. The computing parameter configuration information may be the computing indication information, and the computing indication information is used as the computing parameter configuration information. Alternatively, the computing parameter configuration information may not be sent.

In a possible design, the computing parameter configuration information may include a configuration of a computing resource and/or a configuration of computing quality of service, the configuration of the computing resource may include a size of the computing resource and/or a storage size, and the configuration of the computing quality of service may include one or more of the following: a computing processing mode, computing processing precision, and computing processing time.

In a possible design, the transmission requirement information may include a communication resource requirement and/or a communication quality of service requirement, and the communication quality of service requirement may include a bandwidth requirement and/or a delay requirement.

In a possible design, that a computing execution control unit obtains computing indication information includes: The computing execution control unit receives the computing indication information from the computing unit. To be specific, the first computing service may be requested by the computing unit, or the computing unit may send a current computing status to the computing execution control unit, to request to adjust a communication parameter.

In a possible design, the computing execution control unit is a first computing execution control unit. The communication method provided in the fourth aspect may further include: The computing execution control unit sends the computing indication information to a second computing execution control unit.

For example, the computing execution control unit is a computing execution control unit deployed on an access network device. After obtaining the computing indication information, the computing execution control unit may send the computing indication information to the second computing execution control unit. For example, the second computing execution control unit may be a computing execution control unit deployed on a core network.

In a possible design, the computing execution control unit is a second computing execution control unit, and that a computing execution control unit obtains computing indication information may include: The computing execution control unit receives the computing indication information from a first computing execution control unit. To be specific, the computing execution control unit may obtain the computing indication information from another computing execution control unit.

According to a fifth aspect, a communication method is provided. The communication method includes: A computing transmission control unit obtains transmission indication information; and the computing transmission control unit sends computing requirement information or transmission indication information to a computing execution control unit. The transmission indication information indicates a current communication parameter of a computing unit, and the computing requirement information indicates a computing requirement corresponding to the transmission indication information.

Based on the communication method provided in the fifth aspect, the computing transmission control unit may obtain the transmission indication information, where the transmission indication information indicates the current communication parameter of the computing unit. The computing execution control unit and the computing transmission control unit collaborate to obtain computing parameter configuration information corresponding to the computing indication information, and send the computing parameter configuration information to the computing unit, so that the computing unit can perform computing processing based on the computing parameter configuration information. In this way, information is directly exchanged in computing control and communication control processes, for example, the computing execution control unit and the computing unit directly exchange the computing parameter configuration information or the like, and information does not need to be exchanged through an open interface. An interaction delay is small. This can resolve a problem that a wireless communication service and a computing service can be provided for a user only when a delay is large, thereby improving user experience.

In a possible design, the computing requirement information is determined by the computing transmission control unit based on the transmission indication information and first mapping information, where the first mapping information may indicate a correspondence between a computing parameter and a communication parameter.

In this way, the computing transmission control unit can determine, based on the current communication parameter of the computing unit indicated by the transmission indication information and the first mapping information, a computing parameter corresponding to the current transmission parameter of the computing unit, and use the computing parameter as the computing requirement information. For example, the computing transmission control unit may maintain the first mapping information, and the first mapping information may be preconfigured.

In a possible design, the computing unit is deployed on a terminal device, an access network device, or a core network.

In a possible design, the computing execution control unit is a computing management function or a computing resource control function, and the computing transmission control unit is a session management function or a radio resource control function.

In a possible design, a convergence anchor may include the computing execution control unit and the computing transmission control unit, and the convergence anchor is a core network element.

In a possible design, a convergence scheduling unit may include the computing execution control unit and the computing transmission control unit, and the convergence scheduling unit is an access network device, or the convergence scheduling unit may be deployed on an access network device.

In a possible design, the computing requirement information may include a computing resource requirement and/or a computing quality of service requirement, and the computing quality of service requirement may include one or more of the following: a computing processing mode requirement, a computing processing precision requirement, and a computing processing time requirement.

In a possible design, that a computing transmission control unit obtains transmission indication information may include: The computing transmission control unit receives the transmission indication information from the computing unit. To be specific, the computing unit may send the current communication parameter to the computing transmission control unit, to request to adjust a computing parameter.

In a possible design, the computing transmission control unit is a first computing transmission control unit. The communication method provided in the fifth aspect may further include: The computing transmission control unit sends the transmission indication information to a second computing transmission control unit.

In a possible design, the computing transmission control unit is a second computing transmission control unit. That a computing transmission control unit obtains transmission indication information may include: The computing transmission control unit receives the transmission indication information from a first computing transmission control unit. To be specific, the computing transmission control unit may obtain the transmission indication information from another computing transmission control unit.

According to a sixth aspect, a communication method is provided. The communication method includes: A computing unit receives computing parameter configuration information from a computing execution control unit; the computing unit receives transmission parameter configuration information from a computing transmission control unit; and the computing unit performs computing processing based on the computing parameter configuration information and the transmission parameter configuration information. The computing parameter configuration information indicates a computing parameter of the computing unit, and the transmission parameter configuration information indicates a corresponding communication parameter of the computing unit.

In a possible design, the computing unit is deployed on a terminal device, an access network device, or a core network.

In a possible design, the computing execution control unit is a computing management function or a computing resource control function, and the computing transmission control unit is a session management function or a radio resource control function.

In a possible design, a convergence anchor includes the computing execution control unit and the computing transmission control unit, and the convergence anchor is a core network element.

In a possible design, a convergence scheduling unit may include the computing execution control unit and the computing transmission control unit, and the convergence scheduling unit is an access network device, or the convergence scheduling unit may be deployed on an access network device.

In a possible design, the computing parameter configuration information may include a configuration of a computing resource and/or a configuration of computing quality of service, the configuration of the computing resource may include a size of the computing resource and/or a storage size, and the configuration of the computing quality of service may include one or more of the following: a computing processing mode, computing processing precision, and computing processing time.

In a possible design, the transmission parameter configuration information may include a configuration of a communication resource and/or a configuration of communication quality of service, the configuration of the communication resource may include a size of the communication resource, and the configuration of the communication quality of service may include bandwidth and/or a delay.

In a possible design, the communication method provided in the sixth aspect may further include: The computing unit sends service request information to a convergence orchestration unit. The service request information may be for requesting a first computing service.

In a possible design, the convergence orchestration unit is a core network element.

In a possible design, the communication method provided in the sixth aspect may further include: The computing unit sends computing indication information to the computing execution control unit. The computing indication information may indicate to request a first computing service, or indicate a current computing parameter of the computing unit.

In a possible design, the communication method provided in the sixth aspect may further include: The computing unit sends transmission indication information to the computing transmission control unit. The transmission indication information may indicate a current communication parameter of the computing unit.

In addition, for technical effects of the communication method in the sixth aspect, refer to the technical effects of the communication method in any possible implementation of the first aspect to the sixth aspect. Details are not described herein again.

According to a seventh aspect, a communication apparatus is provided. The communication apparatus includes: a transceiver module and a processing module.

The processing module is configured to obtain service request information. The transceiver module is configured to send computing requirement information to a computing execution control unit. The transceiver module is further configured to send transmission requirement information to a computing transmission control unit. The service request information is for requesting a first computing service, the computing requirement information indicates a computing requirement corresponding to the first computing service, and the transmission requirement information indicates a communication requirement corresponding to the first computing service.

In a possible design, the transceiver module is further configured to receive computing scheduling information from the computing execution control unit. The processing module is further configured to determine the transmission requirement information based on a service level requirement of the first computing service and the computing scheduling information. The computing scheduling information includes computing parameter configuration information separately corresponding to at least one computing unit and an identifier of the at least one computing unit.

In a possible design, the computing parameter configuration information may include a configuration of a computing resource and/or a configuration of computing quality of service, the configuration of the computing resource may include a size of the computing resource and/or a storage size, and the configuration of the computing quality of service may include one or more of the following: a computing processing mode, computing processing precision, and computing processing time.

In a possible design, any one of the at least one computing unit may be deployed on a terminal device, an access network device, or a core network.

In a possible design, the communication apparatus is a core network element.

In a possible design, the computing execution control unit may be a computing management function or a computing resource control function, and the computing transmission control unit may be a session management function or a radio resource control function.

In a possible design, a convergence anchor may include the computing execution control unit and the computing transmission control unit, and the convergence anchor may be a core network element.

In a possible design, a convergence scheduling unit may include the computing execution control unit and the computing transmission control unit, and the convergence scheduling unit may be an access network device, or the convergence scheduling unit may be deployed on an access network device.

In a possible design, the computing requirement information may include a computing resource requirement and/or a computing quality of service requirement, and the computing quality of service requirement may include one or more of the following: a computing processing mode requirement, a computing processing precision requirement, and a computing processing time requirement.

In a possible design, the transmission requirement information may include a communication resource requirement and/or a communication quality of service requirement, and the communication quality of service requirement may include a bandwidth requirement and/or a delay requirement.

It should be noted that, the transceiver module according to the seventh aspect may include a receiving module and a sending module. A specific implementation of the transceiver module is not specifically limited in this application.

Optionally, the communication apparatus according to the seventh aspect may further include a storage module, and the storage module stores a program or instructions. When the processing module executes the program or the instructions, the communication apparatus according to the seventh aspect may be enabled to perform the method according to the first aspect.

It should be noted that the communication apparatus in the seventh aspect may be a convergence orchestration unit, or may be a chip (system) or another part or component that may be disposed in the convergence orchestration unit. This is not limited in this application.

In addition, for technical effects of the communication apparatus according to the seventh aspect, refer to the technical effects of the communication method according to any possible implementation of the first aspect. Details are not described herein again.

According to an eighth aspect, a communication apparatus is provided. The communication apparatus includes: a transceiver module and a processing module.

The processing module is configured to obtain computing requirement information. The transceiver module is configured to send computing parameter configuration information to a computing unit. The computing requirement information indicates a computing requirement corresponding to a first computing service, and the computing parameter configuration information indicates a computing parameter of the computing unit.

In a possible design, the transceiver module is further configured to receive the computing requirement information from a convergence orchestration unit; or the transceiver module is further configured to receive the computing requirement information from a computing transmission control unit.

In a possible design, the transceiver module is further configured to receive transmission indication information from the computing transmission control unit. The processing module is further configured to determine the computing requirement information based on the transmission indication information and first mapping information. The transmission indication information may indicate a current communication parameter of the computing unit, and the first mapping information may indicate a correspondence between a computing parameter and a communication parameter.

In a possible design, the communication apparatus may be a computing management function or a computing resource control function, and the computing transmission control unit may be a session management function or a radio resource control function.

In a possible design, a convergence anchor may include the communication apparatus and the computing transmission control unit, and the convergence anchor may be a core network element.

In a possible design, a convergence scheduling unit may include the communication apparatus and the computing transmission control unit, and the convergence scheduling unit may be an access network device, or the convergence scheduling unit may be deployed on an access network device.

In a possible design, the computing unit may be deployed on a terminal device, an access network device, or a core network.

In a possible design, the convergence orchestration unit is a core network element.

In a possible design, the computing parameter configuration information may be determined by the communication apparatus based on the computing requirement information and computing capability information, and the computing capability information may include a computing capability of one or more computing units.

In a possible design, the transceiver module is further configured to send computing scheduling information to the convergence orchestration unit. The computing scheduling information may include the computing parameter configuration information separately corresponding to the at least one computing unit and an identifier of the at least one computing unit.

In a possible design, the computing requirement information may include a computing resource requirement and/or a computing quality of service requirement, and the computing quality of service requirement may include one or more of the following: a computing processing mode requirement, a computing processing precision requirement, and a computing processing time requirement.

In a possible design, the computing parameter configuration information may include a configuration of a computing resource and/or a configuration of computing quality of service, the configuration of the computing resource may include a size of the computing resource and/or a storage size, and the configuration of the computing quality of service may include one or more of the following: a computing processing mode, computing processing precision, and computing processing time.

It should be noted that, the transceiver module according to the eighth aspect may include a receiving module and a sending module. A specific implementation of the transceiver module is not specifically limited in this application.

Optionally, the communication apparatus in the eighth aspect may further include a storage module, and the storage module stores a program or instructions. When the processing module executes the program or the instructions, the communication apparatus according to the eighth aspect may be enabled to perform the method according to the second aspect.

It should be noted that the communication apparatus in the eighth aspect may be a computing execution control unit, or may be a chip (system) or another part or component that may be disposed in the computing execution control unit. This is not limited in this application.

In addition, for technical effects of the communication apparatus according to the eighth aspect, refer to the technical effects of the communication method according to any possible implementation of the second aspect. Details are not described herein again.

According to a ninth aspect, a communication apparatus is provided. The communication apparatus includes: a transceiver module and a processing module.

The processing module is configured to obtain transmission requirement information. The transceiver module is configured to send transmission parameter configuration information to a computing unit. The transmission requirement information indicates a communication requirement corresponding to a first computing service, and the transmission parameter configuration information indicates a communication parameter of the computing unit.

In a possible design, the transceiver module is further configured to receive the transmission requirement information from a convergence orchestration unit. The transceiver module is further configured to receive the transmission requirement information from a computing execution control unit.

In a possible design, the transceiver module is further configured to receive computing indication information from the computing execution control unit. The processing module is further configured to determine the transmission requirement information based on the computing indication information and first mapping information. The computing indication information indicates a current computing parameter of the computing unit, and the first mapping information indicates a correspondence between a computing parameter and a communication parameter.

In a possible design, the transceiver module is further configured to receive computing indication information from the computing execution control unit. The processing module is further configured to determine the transmission requirement information based on the computing indication information, first mapping information, and second mapping information. The computing indication information may indicate to request the first computing service, the first mapping information indicates a correspondence between a computing parameter and a communication parameter, and the second mapping information indicates a correspondence between a computing service and a computing parameter.

In a possible design, the computing execution control unit may be a computing management function or a computing resource control function, and the communication apparatus may be a session management function or a radio resource control function.

In a possible design, a convergence anchor may include the computing execution control unit and the communication apparatus, and the convergence anchor may be a core network element.

In a possible design, a convergence scheduling unit may include the computing execution control unit and the communication apparatus, and the convergence scheduling unit may be an access network device, or the convergence scheduling unit may be deployed on an access network device.

In a possible design, the computing unit may be deployed on a terminal device, an access network device, or a core network.

In a possible design, the convergence orchestration unit is a core network element.

In a possible design, the transmission parameter configuration information may be determined by the communication apparatus based on the transmission requirement information and transmission capability information, and the transmission capability information includes a communication capability of one or more computing units.

In a possible design, the transmission requirement information may include a communication resource requirement and/or a communication quality of service requirement, and the communication quality of service requirement may include a bandwidth requirement and/or a delay requirement.

In a possible design, the transmission parameter configuration information may include a configuration of a communication resource and/or a configuration of communication quality of service, the configuration of the communication resource may include a size of the communication resource, and the configuration of the communication quality of service may include bandwidth and/or a delay.

It should be noted that the transceiver module in the ninth aspect may include a receiving module and a sending module. A specific implementation of the transceiver module is not specifically limited in this application.

Optionally, the communication apparatus according to the ninth aspect may further include a storage module, and the storage module stores a program or instructions. When the processing module executes the program or the instructions, the communication apparatus according to the ninth aspect may be enabled to perform the method according to the third aspect.

It should be noted that the communication apparatus in the ninth aspect may be a computing transmission control unit, or may be a chip (system) or another part or component that may be disposed in the computing transmission control unit. This is not limited in this application.

In addition, for technical effects of the communication apparatus according to the ninth aspect, refer to the technical effects of the communication method according to any possible implementation of the third aspect. Details are not described herein again.

According to a tenth aspect, a communication apparatus is provided. The communication apparatus includes: a transceiver module and a processing module.

The processing module is configured to obtain computing indication information. The transceiver module is configured to send transmission requirement information or the computing indication information to a computing transmission control unit. The computing indication information indicates to request a first computing service, or indicates a current computing parameter of a computing unit, and the transmission requirement information indicates a communication requirement corresponding to the computing indication information.

In a possible design, the computing indication information indicates the current computing parameter of the computing unit, the transmission requirement information is determined by the communication apparatus based on the computing indication information and first mapping information, where the first mapping information may indicate a correspondence between a computing parameter and a communication parameter.

In a possible design, the computing indication information indicates to request the first computing service, the transmission requirement information is determined by the communication apparatus based on the computing indication information, first mapping information, and second mapping information, where the first mapping information may indicate a correspondence between a computing parameter and a communication parameter, and the second mapping information may indicate a correspondence between a computing service and a computing parameter.

In a possible design, the computing unit is deployed on a terminal device, an access network device, or a core network.

In a possible design, the communication apparatus is a computing management function or a computing resource control function, and the computing transmission control unit is a session management function or a radio resource control function.

In a possible design, a convergence anchor may include the communication apparatus and the computing transmission control unit, and the convergence anchor is a core network element.

In a possible design, a convergence scheduling unit may include the communication apparatus and the computing transmission control unit, and the convergence scheduling unit is an access network device, or the convergence scheduling unit may be deployed on an access network device.

In a possible design, the transceiver module is further configured to send computing parameter configuration information to the computing unit. The computing parameter configuration information may indicate a computing parameter of the computing unit.

In a possible design, the computing indication information indicates to request the first computing service, the computing parameter configuration information is determined by the communication apparatus based on the computing indication information, second mapping information, and computing capability information, where the second mapping information may indicate a correspondence between a computing service and a computing parameter.

In a possible design, the computing parameter configuration information may include a configuration of a computing resource and/or a configuration of computing quality of service, the configuration of the computing resource may include a size of the computing resource and/or a storage size, and the configuration of the computing quality of service may include one or more of the following: a computing processing mode, computing processing precision, and computing processing time.

In a possible design, the transmission requirement information may include a communication resource requirement and/or a communication quality of service requirement, and the communication quality of service requirement may include a bandwidth requirement and/or a delay requirement.

In a possible design, the transceiver module is further configured to receive computing indication information from the computing unit.

In a possible design, the communication apparatus is a first computing execution control unit. The transceiver module is further configured to send the computing indication information to a second computing execution control unit.

In a possible design, the communication apparatus is a second computing execution control unit. The transceiver module is further configured to receive the computing indication information from a first computing execution control unit.

It should be noted that the transceiver module in the tenth aspect may include a receiving module and a sending module. A specific implementation of the transceiver module is not specifically limited in this application.

Optionally, the communication apparatus according to the tenth aspect may further include a storage module, and the storage module stores a program or instructions. When the processing module executes the program or the instructions, the communication apparatus according to the tenth aspect may be enabled to perform the method according to the fourth aspect.

It should be noted that the communication apparatus in the tenth aspect may be a computing execution control unit, or may be a chip (system) or another part or component that may be disposed in the computing execution control unit. This is not limited in this application.

In addition, for technical effects of the communication apparatus according to the tenth aspect, refer to the technical effects of the communication method according to any possible implementation of the fourth aspect. Details are not described herein again.

According to an eleventh aspect, a communication apparatus is provided. The communication apparatus includes: a transceiver module and a processing module.

The processing module is configured to obtain transmission indication information. The transceiver module is configured to send computing requirement information or the transmission indication information to a computing execution control unit. The transmission indication information indicates a current communication parameter of a computing unit, and the computing requirement information indicates a computing requirement corresponding to the transmission indication information.

In a possible design, the computing requirement information is determined by the communication apparatus based on the transmission indication information and first mapping information, where the first mapping information may indicate a correspondence between a computing parameter and a communication parameter.

In a possible design, the computing unit is deployed on a terminal device, an access network device, or a core network.

In a possible design, the computing execution control unit is a computing management function or a computing resource control function, and the communication apparatus is a session management function or a radio resource control function.

In a possible design, a convergence anchor may include the computing execution control unit and the communication apparatus, and the convergence anchor is a core network element.

In a possible design, a convergence scheduling unit may include the computing execution control unit and the communication apparatus, and the convergence scheduling unit is an access network device, or the convergence scheduling unit may be deployed on an access network device.

In a possible design, the computing requirement information may include a computing resource requirement and/or a computing quality of service requirement, and the computing quality of service requirement may include one or more of the following: a computing processing mode requirement, a computing processing precision requirement, and a computing processing time requirement.

In a possible design, the transceiver module is further configured to receive the transmission indication information from the computing unit.

In a possible design, the communication apparatus is a first computing transmission control unit. The transceiver module is further configured to send the transmission indication information to a second computing transmission control unit.

In a possible design, the communication apparatus is a second computing transmission control unit. The transceiver module is further configured to receive the transmission indication information from a first computing transmission control unit.

It should be noted that the transceiver module in the eleventh aspect may include a receiving module and a sending module. A specific implementation of the transceiver module is not specifically limited in this application.

Optionally, the communication apparatus according to the eleventh aspect may further include a storage module, and the storage module stores a program or instructions. When the processing module executes the program or the instructions, the communication apparatus according to the eleventh aspect may be enabled to perform the method according to the fifth aspect.

It should be noted that the communication apparatus in the eleventh aspect may be a computing transmission control unit, or may be a chip (system) or another part or component that may be disposed in the computing transmission control unit. This is not limited in this application.

In addition, for technical effects of the communication apparatus according to the eleventh aspect, refer to the technical effects of the communication method according to any possible implementation of the fifth aspect. Details are not described herein again.

According to a twelfth aspect, a communication apparatus is provided. The communication apparatus includes: a transceiver module and a processing module.

The transceiver module is configured to receive computing parameter configuration information from a computing execution control unit. The transceiver module is further configured to receive transmission parameter configuration information from a computing transmission control unit. The processing module is configured to perform computing processing based on the computing parameter configuration information and the transmission parameter configuration information. The computing parameter configuration information indicates a computing parameter of the communication apparatus, and the transmission parameter configuration information indicates a corresponding communication parameter of the communication apparatus.

In a possible design, the communication apparatus is deployed on a terminal device, an access network device, or a core network.

In a possible design, the computing execution control unit is a computing management function or a computing resource control function, and the computing transmission control unit is a session management function or a radio resource control function.

In a possible design, a convergence anchor includes the computing execution control unit and the computing transmission control unit, and the convergence anchor is a core network element.

In a possible design, a convergence scheduling unit may include the computing execution control unit and the computing transmission control unit, and the convergence scheduling unit is an access network device, or the convergence scheduling unit may be deployed on an access network device.

In a possible design, the computing parameter configuration information may include a configuration of a computing resource and/or a configuration of computing quality of service, the configuration of the computing resource may include a size of the computing resource and/or a storage size, and the configuration of the computing quality of service may include one or more of the following: a computing processing mode, computing processing precision, and computing processing time.

In a possible design, the transmission parameter configuration information may include a configuration of a communication resource and/or a configuration of communication quality of service, the configuration of the communication resource may include a size of the communication resource, and the configuration of the communication quality of service may include bandwidth and/or a delay.

In a possible design, the transceiver module is further configured to send service request information to a convergence orchestration unit. The service request information may be for requesting a first computing service.

In a possible design, the convergence orchestration unit is a core network element.

In a possible design, the transceiver module is further configured to send computing indication information to the computing execution control unit. The computing indication information may indicate to request a first computing service, or indicate a current computing parameter of the communication apparatus.

In a possible design, the transceiver module is configured to send transmission indication information to the computing transmission control unit. The transmission indication information may indicate a current communication parameter of the communication apparatus.

It should be noted that the transceiver module in the twelfth aspect may include a receiving module and a sending module. A specific implementation of the transceiver module is not specifically limited in this application.

Optionally, the communication apparatus according to the twelfth aspect may further include a storage module, and the storage module stores a program or instructions. When the processing module executes the program or the instructions, the communication apparatus according to the twelfth aspect may be enabled to perform the method according to the sixth aspect.

It should be noted that the communication apparatus in the twelfth aspect may be a computing unit, or may be a chip (system) or another part or component that may be disposed in the computing unit. This is not limited in this application.

In addition, for technical effects of the communication apparatus according to the twelfth aspect, refer to the technical effects of the communication method according to any possible implementation of the sixth aspect. Details are not described herein again.

According to a thirteenth aspect, a communication apparatus is provided. The communication apparatus includes a processor. The processor is coupled to a memory, and the memory is configured to store a computer program.

The processor is configured to execute the computer program stored in the memory, so that the method according to any possible implementation of the first aspect to the sixth aspect is performed.

In a possible design, the communication apparatus according to the thirteenth aspect may further include a transceiver. The transceiver may be a transceiver circuit or an input/output port. The transceiver may be used by the communication apparatus to communicate with another device.

It should be noted that the input port may be configured to implement receiving functions in the first aspect to the sixth aspect, and the output port may be configured to implement sending functions in the first aspect to the sixth aspect.

In this application, the communication apparatus according to the thirteenth aspect may be a convergence orchestration unit, a computing execution control unit, a computing transmission control unit, or a computing unit, or may be a chip or a chip system disposed inside the convergence orchestration unit, the computing execution control unit, the computing transmission control unit, or the computing unit.

In addition, for technical effects of the communication apparatus in the thirteenth aspect, refer to the technical effects of the method in any implementation of the first aspect to the sixth aspect. Details are not described herein again.

According to a fourteenth aspect, a communication system is provided. The communication system includes a computing execution control unit and a computing transmission control unit, and may further include a computing unit and/or a convergence orchestration unit. The computing execution control unit is configured to implement the method according to the second aspect. The computing transmission control unit is configured to implement the method according to the third aspect. The convergence orchestration unit is configured to implement the method according to the first aspect. The computing unit is configured to implement the method according to the sixth aspect.

Alternatively, the communication system includes the communication apparatus in the eighth aspect for implementing the method according to the second aspect and the communication apparatus in the ninth aspect for implementing the method according to the third aspect, and may further include the communication apparatus in the seventh aspect for implementing the method according to the first aspect and/or the communication apparatus in the twelfth aspect for implementing the method according to the sixth aspect.

Alternatively, the communication system includes a computing execution control unit and a computing transmission control unit, and may further include a computing unit. The computing execution control unit is configured to implement the method according to the fourth aspect. The computing transmission control unit is configured to implement the method according to the fifth aspect. The computing unit is configured to implement the method according to the sixth aspect.

Alternatively, the communication system includes the communication apparatus in the tenth aspect for implementing the method according to the fourth aspect, and the communication apparatus in the eleventh aspect for implementing the method according to the fifth aspect, and may further include the communication apparatus in the twelfth aspect for implementing the method according to the sixth aspect.

According to a fifteenth aspect, a chip system is provided, where the chip system includes a logic circuit. The logic circuit is configured to implement processing functions in the first aspect to the sixth aspect. The chip system further includes an input/output port, and the input/output port is configured to implement receiving and sending functions in the first aspect to the sixth aspect. Specifically, the input port may be configured to implement receiving functions in the first aspect to the sixth aspect, and the output port may be configured to implement sending functions in the first aspect to the sixth aspect.

In a possible design, the chip system further includes a memory, and the memory is configured to store program instructions and data for implementing the functions in the first aspect to the sixth aspect.

The chip system may include a chip, or may include a chip and another discrete component.

According to a sixteenth aspect, a computer-readable storage medium is provided. The computer-readable storage medium stores a computer program or instructions. When the computer program runs or the instructions are run on a computer, the method according to any possible implementation of the first aspect to the sixth aspect is performed.

According to a seventeenth aspect, a computer program product is provided. The computer program product includes a computer program or instructions. When the computer program or the instructions are run on a computer, the method according to any possible implementation of the first aspect to the sixth aspect is performed.

### BRIEF DESCRIPTION OF DRAWINGS

FIG. 1 is a schematic of an architecture of a communication system according to an embodiment of this application;
FIG. 2 is a schematic of an architecture of another communication system according to an embodiment of this application;
FIG. 3 is a schematic of an architecture of a control plane protocol according to an embodiment of this application;
FIG. 4 is a schematic of an architecture of a mobile communication system and a computing system according to an embodiment of this application;
FIG. 5 is a schematic of a collaborative computing scenario according to an embodiment of this application;
FIG. 6 is a schematic of a type of resource allocation according to an embodiment of this application;
FIG. 7 is a schematic of another collaborative computing scenario according to an embodiment of this application;
FIG. 8 is a schematic of another type of resource allocation according to an embodiment of this application;
FIG. 9 is a schematic of a structure of a communication apparatus according to an embodiment of this application;
FIG. 10 is a schematic flowchart of a communication method according to an embodiment of this application;
FIG. 11 is a schematic flowchart of another communication method according to an embodiment of this application;
FIG. 12 is a schematic flowchart of still another communication method according to an embodiment of this application;
FIG. 13 is a schematic flowchart of still another communication method according to an embodiment of this application;
FIG. 14 is a schematic flowchart of still another communication method according to an embodiment of this application;
FIG. 15 is a schematic flowchart of still another communication method according to an embodiment of this application; and
FIG. 16 is a schematic of a structure of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5th generation (5th generation, 5G) mobile communication system, for example, a new radio (new radio, NR) system, and a future communication system, for example, a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, sometimes "of (of)", "relevant (corresponding, relevant)", and "corresponding (corresponding)" may be mixed. It should be noted that when differences are not emphasized, the meaning to be expressed is the same.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 1 is first used as an example to describe in detail a communication system applicable to embodiments of this application. For example, FIG. 1 is a schematic of an architecture of a communication system applicable to a communication method according to embodiments of this application.

As shown in FIG. 1, the communication system includes a computing execution control unit, a computing transmission control unit, and a computing unit, and may further include a convergence orchestration (convergence orchestration, CO) unit and/or a service request unit. There may be one or more computing execution control units, there may be one or more computing transmission control units, and there may be one or more computing units.

For example, the computing execution control unit may perform a computing execution control function. For example, the computing execution control unit may obtain a computing parameter of one or more computing units based on a computing requirement or a computing service, and send the computing parameter to a corresponding computing unit. The computing execution control unit may be deployed on an access network device or a core network. When the computing execution control unit is deployed on the core network, the computing execution control unit may be deployed on any core network element, or the computing execution control unit may be independently deployed on the core network. For example, the computing execution control unit may be independently deployed on a network as a network function (network function, NF) or a network element. The computing execution control unit may be evolved from an access network device, any core network element, or the like. The computing execution control unit may implement a function that can be implemented by an access network device or any core network element, or a function of the computing execution control unit provided in this application may be implemented by an access network device or any core network element.

For example, the computing transmission control unit may perform a computing transmission control function. For example, the computing transmission control unit may obtain a communication parameter of one or more computing units based on a transmission requirement or a computing service, and send the communication parameter to a corresponding computing unit. Similar to the computing execution control unit, the computing transmission control unit may be deployed on an access network device or a core network. When the computing transmission control unit is deployed on the core network, the computing transmission control unit may be deployed on any core network element, or the computing transmission control unit may be independently deployed on the core network. For example, the computing transmission control unit may be independently deployed on a network as the network function or a network element. The computing transmission control unit may be evolved from an access network device, any core network element, or the like. The computing transmission control unit may implement a function that can be implemented by an access network device or any core network element, or a function of the computing transmission control unit provided in this application may be implemented by an access network device or any core network element.

For example, the computing unit may perform computing. For example, one or more computing units may perform computing processing based on a computing parameter and a communication parameter. The computing unit may perform computing and communication based on a computing operation (for example, the computing parameter) and the communication parameter. For example, the computing parameter may include a computing resource and/or computing quality of service, and the computing unit may perform computing based on a configured (configured by a computing execution control unit, a convergence anchor, a convergence scheduling unit, or the like) computing resource and/or configured computing quality of service. The communication parameter may include a communication resource and/or communication quality of service. The computing unit may communicate with or transmit computing data or the like to another computing unit based on a configured (configured by a computing transmission control unit, a convergence anchor, a convergence scheduling unit, or the like) communication resource and/or configured communication quality of service. For example, the computing unit may perform unified modeling measurement on underlying heterogeneous computing resources, and perform unified conversion on computing capabilities required by various computing tasks. In this way, the computing tasks can be scheduled to appropriate computing resources, improving computing resource utilization. For example, a logical computing service is scheduled to a central processing unit (central processing unit, CPU) resource, an image computing service is scheduled to a graphics processing unit (graphics processing unit, GPU) resource, and a neural network computing service is scheduled to a neural processing unit (neural processing unit, NPU) resource.

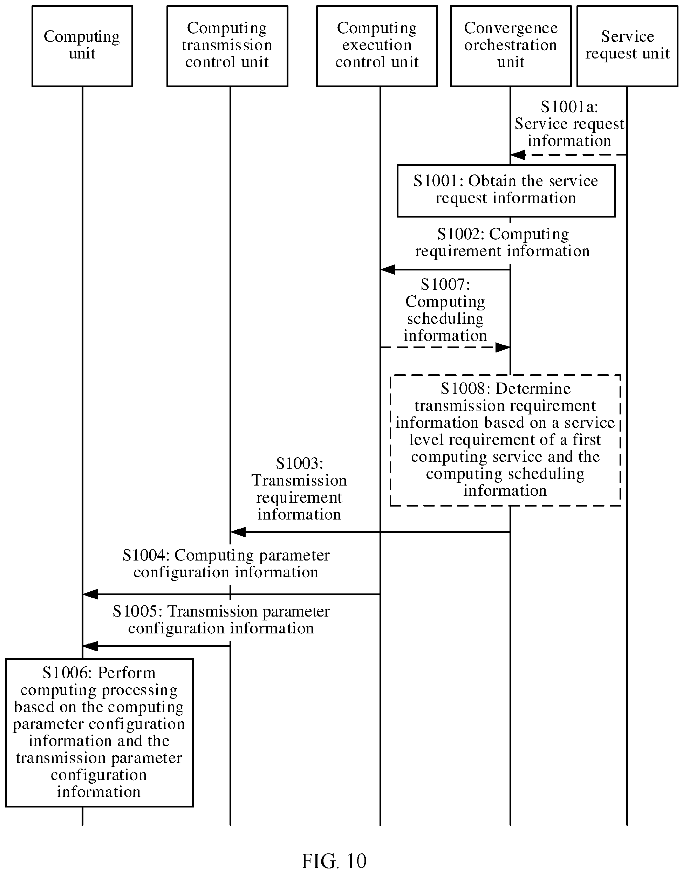

For specific implementations of the computing resource, the computing quality of service, the communication resource, and the communication quality of service, refer to corresponding descriptions in FIG. 10. Details are not described herein.

The computing unit may be deployed on a terminal device, an access network device, or a core network. When the computing unit is deployed on the core network, the computing unit may be deployed on any core network element, or the computing unit may be independently deployed on the core network. For example, the computing unit may be independently deployed on the network as a network function or a network element. The computing unit may be evolved from any core network element, access network device, terminal device, or the like. The computing unit may implement a function that can be implemented by any core network element, access network device, or terminal device. Alternatively, a function of the computing unit provided in this application may be implemented by any core network element, access network device, or terminal device.

Optionally, the convergence orchestration unit may perform computing orchestration and/or communication orchestration on a computing service, to obtain a computing requirement and/or a communication requirement, and separately send the computing requirement and/or the communication requirement obtained through the orchestration to the computing execution control unit and the computing transmission control unit, so that the computing execution control unit performs a computing execution control function, and the computing transmission control unit performs a computing transmission control function.

For example, the convergence orchestration unit may be a core network element. For example, the convergence orchestration unit may be deployed on any core network element, or the convergence orchestration unit may be independently deployed on a core network. For example, the convergence orchestration unit may be independently deployed on a network as a network function or a network element. The convergence orchestration unit may be evolved from any core network element or the like, and the convergence orchestration unit may implement a function that can be implemented by any core network element, or a function of the convergence orchestration unit provided in this application may be implemented by any core network element.

Optionally, the service request network element may implement one or more of the following functions: requesting a computing service from a data orchestration network element, requesting a computing service from or sending a current computing status to the computing execution control unit, requesting a computing service from or sending a current communication status to the computing transmission control unit, and the like.

For example, the service request unit may include an application, an application server, a terminal device, or the like. The application may be an application (the application may be deployed on a terminal device) of an operator for network planning and optimization, or may be an application (or may be referred to as a third-party application) (the application may be deployed on an application server) outside a mobile communication network.

It should be noted that names of the computing execution control unit, the computing transmission control unit, the computing unit, the convergence orchestration unit, and the service request unit are not limited in this application. For example, the computing unit may also be referred to as a computing execution unit, a computing executor (Computing executor, CE), or a computing element (computing element, CE). The computing unit may be a container with a computing capability (the computing unit is an independent running environment, is similar to a virtual machine, but has no kernel or operating system, can isolate an application program and an association, can improve computer resource utilization, and is essentially a group of processes that are isolated from each other due to a resource restriction), a pod (the pod includes one container or a group of containers, and one pod does not cross a plurality of physical nodes), a virtual machine (virtual machine software can run a program and an operating system, store data, connect to a network, and perform other computing functions, and needs to be maintained, such as update and system monitoring), a physical host, or the like.

In some embodiments, the computing execution control unit and the computing transmission control unit may be deployed on a same device or network element. FIG. 2 is a schematic of an architecture of another communication system according to an embodiment of this application.

As shown in FIG. 2, the communication system includes a convergence anchor and a computing unit, the communication system includes a convergence scheduling unit and a computing unit, or the communication system includes a convergence anchor, a convergence scheduling unit, and a computing unit. The communication system may further include a convergence orchestration unit and/or a service request unit.

The convergence anchor can support large-scale communication and computing collaboration, to support global optimization of communication resources and computing resources.

For example, functions that can be implemented by the convergence anchor include but are not limited to one or more of the following: managing an address of the computing unit, controlling computing quality of service (quality of service, QoS), managing and maintaining computing capability information of the computing unit, managing a computing session and/or computing bearer, selecting a computing unit configured to implement a computing service, processing a computing session related non-access stratum (non-access stratum, NAS) message, and controlling communication quality of service.

The computing quality of service may include a computing processing mode, computing processing precision, computing processing time, and the like. The computing processing mode may include a serial mode and/or a parallel mode, and the computing processing mode may be a mode of processing between computing resources. Controlling the computing session or the computing bearer may include: establishing, modifying, maintaining, or deleting the computing session or the computing bearer. The computing session may be a tunnel or a link that is for transmitting data and that is between a terminal device, an access network device, and a core network element, and the computing bearer may be a tunnel or a link that is for transmitting data and that is between the access network device and the core network element. The communication quality of service may include bandwidth and/or a delay.

In some embodiments, functions that can be implemented by the convergence anchor may be divided into a computing execution control function and a computing transmission control function. For example, the computing execution control function that can be implemented by the convergence anchor may include but is not limited to one or more of the following: managing an address of the computing unit, controlling computing quality of service, and managing and maintaining computing capability information of the computing unit. For example, the computing transmission control function that can be implemented by the convergence anchor may include but is not limited to one or more of the following: managing a computing session and/or a computing bearer, selecting a computing unit configured to implement a computing service, termination of a computing session related NAS message, and controlling communication quality of service.

In some embodiments, the convergence anchor may include a computing execution control unit and a computing transmission control unit (as shown in FIG. 1). The computing execution control unit and the computing transmission control unit may be deployed on the convergence anchor. The computing execution control unit may implement a computing execution control function of the convergence anchor, the computing transmission control unit may implement a computing transmission control function of the convergence anchor, and the convergence anchor may implement a function implemented by the computing execution control unit and a function implemented by the computing transmission control unit.

For example, the computing execution control unit of the convergence anchor may be referred to as a computing management function (computing management function, CMF) or a CMF unit, and the computing execution control function of the convergence anchor may be implemented by the CMF.

For example, the computing transmission control unit of the convergence anchor may be referred to as an enhanced session management function (session management function, SMF+) or an SMF+ unit, and the computing transmission control function of the convergence anchor may be implemented by the SMF+.

It should be noted that the SMF+ may be evolved from SMF enhancement, and the SMF+ may implement a function that can be implemented by the SMF. Alternatively, the computing transmission control function of the convergence anchor provided in this application may be implemented by the SMF+.

In this way, the computing execution control unit (or referred to as the CMF unit) implements the computing execution control function, and the computing transmission control unit (or referred to as the SMF+ unit) implements the computing transmission control function. The computing execution control function and the computing transmission control function are decoupled or modularized, so that logic for controlling computing and communication is simpler, and networking is more flexibly implemented. For example, one computing execution control unit (or referred to as a CMF unit) may correspond to one or more computing transmission control units (or referred to as SMF+ units).

It should be noted that the convergence anchor may be a core network element. For example, the convergence anchor may be deployed on any core network element, or the convergence anchor may be independently deployed on a core network. For example, the convergence anchor may be independently deployed on the network as a network function or a network element. The convergence anchor may be evolved from any core network element or the like, and the convergence anchor may implement a function that can be implemented by any core network element, or a function of the convergence anchor provided in this application may be implemented by any core network element.

The convergence scheduling unit may support real-time communication and computing collaboration in a small range, so that computing resources can adapt to wireless dynamic (such as channel and mobility) environment changes.

For example, functions that may be implemented by the convergence scheduling unit include but are not limited to one or more of the following: sensing a computing capability of the computing unit, sensing a current computing status of the computing unit, configuring a computing parameter of the computing unit, scheduling the computing unit to perform computing, computing power aggregation, controlling computing quality of service, broadcasting a computing resource of a cell, managing a computing paging service initiated by an access network device or a core network element, managing a computing communication convergence context, and managing (for example, requesting, establishing, updating, and deleting) a computing radio bearer (computing radio bearer, CRB). The computing communication convergence context is for recording information related to a computing service, for example, a currently performed computing step and transmitted information related to the computing service. The computing power aggregation may mean that computing capabilities of at least two computing units (for example, two computing units used as access network devices) are aggregated to implement a computing service. The computing radio bearer may be a tunnel or a link that is for transmitting data and that is between a terminal device and an access network device. The CRB may be a data protocol data unit (protocol data unit, PDU) of a packet data convergence protocol (packet data convergence protocol, PDCP) layer. The PDU of the PDCP layer may be for transmitting control plane data and user plane data, and a computing data PDU may be introduced, or a computing QoS flow is introduced at a service data adaptation protocol (service data adaptation protocol, SDAP) layer to transmit computing data.

In some embodiments, functions that can be implemented by the convergence scheduling unit may be divided into a computing execution control function and a computing transmission control function. For example, the computing execution control function that can be implemented by the convergence scheduling unit may include but are not limited to one or more of the following: sensing a computing capability of the computing unit, sensing a current computing status of the computing unit, configuring a computing parameter of the computing unit, scheduling the computing unit to perform computing, computing power aggregation, controlling computing quality of service, broadcasting a computing resource of a cell, and managing a computing paging service initiated by an access network device or a core network element. For example, the computing transmission control function that can be implemented by the convergence scheduling unit may include but is not limited to one or more of the following: managing a computing communication convergence context and managing a computing radio bearer.

In some embodiments, the convergence scheduling unit may include a computing execution control unit and a computing transmission control unit (as shown in FIG. 1). The computing execution control unit and the computing transmission control unit may be deployed on the convergence scheduling unit. The computing execution control unit may implement a computing execution control function of the convergence scheduling unit, the computing transmission control unit may implement a computing transmission control function of the convergence scheduling unit, and the convergence scheduling unit may implement a function implemented by the computing execution control unit and a function implemented by the computing transmission control unit.

For example, the computing execution control unit of the convergence scheduling unit may be referred to as a computing resource control (computing resource control, CRC) function or a CRC unit, and the computing execution control function of the convergence scheduling unit may be implemented by the CRC.

For example, the computing transmission control unit of the convergence scheduling unit may be referred to as an enhanced radio resource control (radio resource control, RRC+) function or an RRC+ unit, and the computing transmission control function of the convergence scheduling unit may be implemented by the RRC+.

It should be noted that the RRC+ may be evolved from enhanced RRC, and the RRC+ may implement a function that can be implemented by the RRC. Alternatively, the computing transmission control function of the convergence scheduling unit provided in this application may be implemented by the RRC.

In this way, the computing execution control unit (or referred to as the CRC unit) implements the computing execution control function, and the computing transmission control unit (or referred to as the RRC+ unit) implements the computing transmission control function. The computing execution control function and the computing transmission control function are decoupled or modularized, so that logic for controlling computing and communication is simpler, and networking is more flexibly implemented. For example, one computing execution control unit (or referred to as a CRC unit) may correspond to one or more computing transmission control units (or referred to as RRC+ units).

It should be noted that the convergence scheduling unit may be any core network element or access network device. For example, the convergence scheduling unit may be deployed on any core network element or access network device, or the convergence scheduling unit may be independently deployed on a core network. For example, the convergence scheduling unit may be independently deployed on the network as a network function or a network element. The convergence scheduling unit may be evolved from any core network element, access network device, or the like, and the convergence scheduling unit may implement a function that can be implemented by any core network element or access network device, or a function of the convergence scheduling unit provided in this application may be implemented by any core network element or access network device.

For implementations of the computing unit, the convergence orchestration unit, and the service request network element, refer to the descriptions in FIG. 1. Details are not described herein again.

The core network element is located on a network side of the communication system, and may be configured to provide a network service for an access network device, a terminal device, and the like. The core network element may include but is not limited to one or more of the following: a mobility management network element, a session management network element, a user plane network element, a policy control network element, a network exposure network element, and an application network element.

The mobility management network element is mainly configured to perform mobility management, access management, and the like. In a 5G mobile communication system, the mobility management network element may be an access and mobility management function (access and mobility management function, AMF) network element, and mainly performs mobility management, access authentication/authorization, and other functions. In addition, the mobility management network element may be further responsible for transferring a user policy between a terminal and a policy control function (policy control function, PCF) network element.

The session management network element is mainly used for session management (for example, establishment or deletion), maintenance of a session context and user plane forwarding tunnel information, terminal device internet protocol (internet protocol, IP) address allocation and management, selection of a manageable user plane function, serving as a termination point of a policy control and charging function interface, downlink data notification, and the like.

In a 5G mobile communication system, the session management network element may be a session management function (session management function, SMF) network element, and completes allocation of a terminal IP address, user plane function (user plane function, UPF) selection, charging and QoS policy control, and the like.

The user plane network element serves as an interface to a data network, and implements functions such as user plane data forwarding, session/flow-level charging statistics, and bandwidth throttling, that is, packet routing and forwarding, quality of service QoS processing on user plane data, and the like. In a 5G mobile communication system, the user plane network element may be a UPF network element.

The policy control network element includes a user subscription data management function, a policy control function, a charging policy control function, QoS control, and the like, is a unified policy framework for guiding network behavior, and provides policy rule information and the like for a control plane function network element (for example, an AMF or an SMF network element). In a 5G mobile communication system, the policy control network element may be a PCF network element.

The network exposure network element may be configured to provide network capability exposure related frameworks, authentication and interfaces, and transfers information between a 5G network function and another network function. In a 5G mobile communication system, the network exposure network element may be a network exposure function (network exposure function, NEF) network element, is mainly configured to open a service and a capability of a 3GPP network function to an application function (application function, AF), and may further enable the AF to provide information for the 3GPP network function.

The application network element may be configured to provide various business services, can interact with a core network via an NEF network element, and can interact with a policy management framework to perform policy management. In a 5G mobile communication system, the application network element may be an AF network element, represents an application function of a third party or an operator, is an interface for obtaining external application data in a 5G network, and is mainly configured to transfer a requirement of an application side for a network side.

The access network device may also be referred to as an access device or a radio access network device. The access network device can manage a radio resource, provide an access service for a terminal device, and complete data forwarding between the terminal device and a core network. The access network device may also be understood as a base station in a network.

For example, the access network device in embodiments of this application may be any communication device that has a wireless transceiver function and that is configured to communicate with the terminal device. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in the 5G system, may be a network node, for example, a baseband unit (BBU) or a distributed unit (distributed unit, DU), that constitutes a gNB or a transmission point, or may be a satellite, an uncrewed aerial vehicle, or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is generated by the CU, and is finally encapsulated at the PHY layer of the DU into the information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

The terminal device is a terminal that accesses the communication system and has a wireless transceiver function, or a chip or a chip system that may be disposed in the terminal. In this application, the terminal device may also be referred to as a terminal, user equipment (user equipment, UE), an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), an uncrewed aerial vehicle, a computer with a wireless transceiver function, customer premise equipment (customer premise equipment, CPE), a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, another processing device, vehicle-mounted device, or wearable device connected to a wireless modem, a terminal in a 5G network, a terminal in a future evolved network, or the like.

For another example, the terminal device in embodiments of this application may be an express delivery terminal (for example, a device that can monitor a location of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a selfservice checkout machine, or an unmanned convenience store) in intelligent retail. For another example, the terminal device in this application may be a vehicle-mounted module, a vehicle-mounted part, a vehicle-mounted chip or a vehicle-mounted unit built in a vehicle as one or more parts or units, and the vehicle can implement the method in this application via the built-in vehicle-mounted module, vehicle-mounted part, vehicle-mounted chip or vehicle-mounted unit.

It should be noted that the communication method provided in embodiments of this application is applicable to any two nodes shown in FIG. 1 and FIG. 2. For specific implementation, refer to the following method embodiments. Details are not described herein.

It should be noted that, the solutions in embodiments of this application may alternatively be applied to another communication system, and a corresponding name may alternatively be replaced with a name of a corresponding function in the another communication system.

It should be understood that FIG. 1 and FIG. 2 are merely simplified schematics of examples for ease of understanding. The communication systems may further include another device that is not drawn in FIG. 1 and FIG. 2.

The following describes functions of logical interfaces between units in the communication system.
1. Logical interface (which may also be referred to as an application programming interface (application programming interface, API)) between the convergence orchestration unit and the convergence anchor: The convergence orchestration unit orchestrates large-scale (a scale managed and controlled by the convergence anchor) computing and transmission through the logical interface between the convergence orchestration unit and the convergence anchor. One convergence orchestration unit may correspond to one or more convergence anchors, and one convergence orchestration unit may manage and control computing and transmission of one or more convergence anchors.

Logical interface between the convergence orchestration unit and a computing execution control unit in a case in which the convergence anchor includes the computing execution control unit (for example, a CMF unit) and a computing transmission control unit (for example, an SMF+ unit): The convergence orchestration unit manages and controls large-scale computing through the logical interface between the convergence orchestration unit and the CMF. Logical interface between the convergence orchestration unit and the computing transmission control unit: The convergence orchestration unit manages and controls large-scale transmission through the logical interface between the convergence orchestration unit and the SMF+.

Logical interface between the computing execution control unit and the computing transmission control unit in the convergence anchor: The computing execution control unit and the computing transmission control unit may exchange a current computing status and a current communication status of the computing unit through the logical interface between the computing execution control unit and the computing transmission control unit. One computing execution control unit may correspond to one or more computing transmission control units.

For example, the computing execution control unit may select, based on a correspondence between a computing execution control unit and a computing transmission control unit, a computing transmission control unit from one or more computing transmission control units to perform transmission collaboration. For example, the computing execution control unit sends the current computing status of the computing unit to the computing transmission control unit, so that the computing transmission control unit adjusts a communication parameter of the computing unit based on the computing status.

For example, the computing transmission control unit may select, based on a correspondence between a computing execution control unit and a computing transmission control unit, a computing transmission control unit to perform computing collaboration. For example, the computing transmission control unit sends the current communication status of the computing unit to the computing execution control unit, so that the computing execution control unit adjusts a computing parameter of the computing unit based on the communication status.

2. Logical interface between the convergence orchestration unit and the convergence scheduling unit: The convergence orchestration unit orchestrates small-scale (a scale managed and controlled by the convergence scheduling unit) computing and transmission through the logical interface between the convergence orchestration unit and the convergence scheduling unit. One convergence orchestration unit may correspond to one or more convergence scheduling units, and one convergence orchestration unit may manage and control computing and transmission of one or more convergence scheduling units.

Logical interface between the convergence orchestration unit and a computing execution control unit in a case in which the convergence scheduling unit includes the computing execution control unit (for example, a CRC unit) and a computing transmission control unit (for example, an RRC+ unit): The convergence orchestration unit manages and controls small-scale computing through the logical interface between the convergence orchestration unit and the CRC. Logical interface between the convergence orchestration unit and the computing transmission control unit: The convergence orchestration unit manages and controls small-scale transmission through the logical interface between the convergence orchestration unit and the RRC+.

Logical interface between the computing execution control unit and the computing transmission control unit in the convergence scheduling unit: The computing execution control unit and the computing transmission control unit may exchange a current computing status and a current communication status of the computing unit through the logical interface between the computing execution control unit and the computing transmission control unit. One computing execution control unit may correspond to one or more computing transmission control units. A specific implementation is similar to that of the logical interface between the computing execution control unit and the computing transmission control unit in the convergence anchor. For details, refer to the descriptions of the logical interface between the computing execution control unit and the computing transmission control unit in the convergence anchor. Details are not described herein again.

3. Logical interface between the convergence anchor and the convergence scheduling unit: The convergence anchor and the convergence scheduling unit may implement one or more of the following through the logical interface between the convergence anchor and the convergence scheduling unit: managing a computing bearer, exchanging a computing service request (for example, network planning and optimization requested by a terminal device) and response in a network, configuring or adjusting a computing parameter and a communication parameter, and the like. One convergence anchor may correspond to one or more convergence scheduling units, and one convergence anchor may manage and control computing and transmission of one or more convergence scheduling units.

4. Logical interface between the convergence anchor and the computing unit: The convergence anchor and the computing unit may implement one or more of the following through the logical interface between the convergence anchor and the computing unit: exchanging a computing service request and response, allocating an address of the computing unit (for example, the computing unit is a terminal device), configuring or adjusting a computing parameter and a communication parameter of the computing unit, and the like.

5. Logical interface between the convergence scheduling unit and the computing unit: The convergence scheduling unit and the computing unit may implement one or more of the following through the logical interface between the convergence scheduling unit and the computing unit: exchanging a computing service request and response, configuring or adjusting a computing parameter and a communication parameter of the computing unit in real time, sensing a current computing status and a current communication status of the computing unit, and the like.

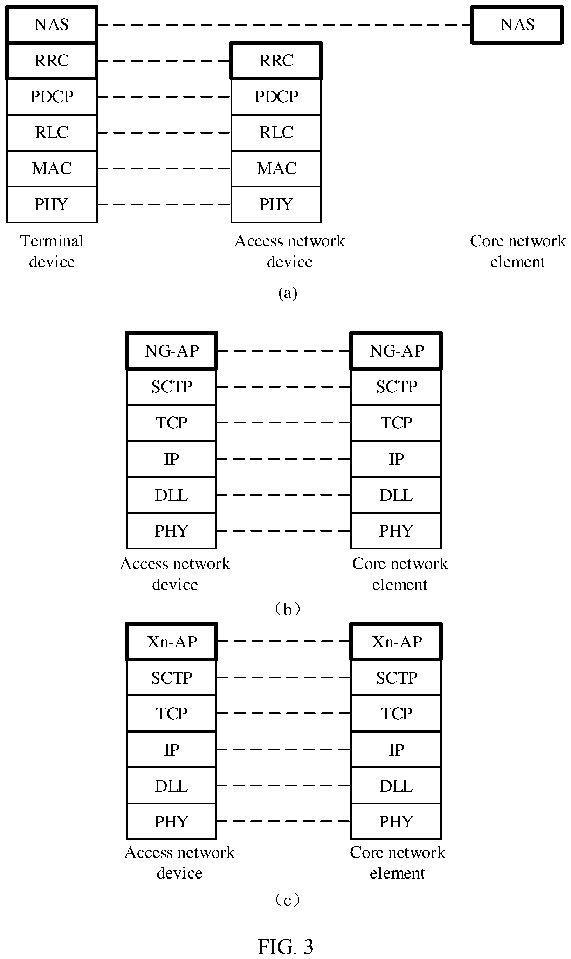

For example, FIG. 3 is a schematic of an architecture of a control plane protocol according to an embodiment of this application. The communication systems shown in FIG. 1 and FIG. 2 are applicable to the protocol architecture shown in FIG. 3.

In FIG. 3, an interface protocol between a core network element and a terminal device, an interface protocol between an access network device and a terminal device, an interface protocol between an access network device and a core network element, and an interface protocol between access network devices in a 5G mobile communication system are used as an example for description. The core network element, the access network device, and the terminal device in this application are not only applicable to the 5G mobile communication system, for example, may be applicable to a 4G mobile communication system, the 5G mobile communication system, and a future mobile communication system such as a 6G mobile communication system.

The core network element may implement a function of the convergence orchestration network element, the computing execution control unit, the computing transmission control unit, the convergence anchor, the convergence scheduling unit, or the computing unit shown in FIG. 1 or FIG. 2. The access network device may implement a function of the computing execution control unit, the computing transmission control unit, the convergence scheduling unit, or the computing unit shown in FIG. 1 or FIG. 2. The terminal device may implement a function of the service request unit or the computing unit shown in FIG. 1 or FIG. 2.

As shown in (a) in FIG. 3, in a top-to-bottom order, both a core network element and a terminal device include a non-access stratum (non-access stratum, NAS), and a computing transmission control function and a computing execution control function may be implemented via the NAS layers of the core network element and the terminal device. Both an access network device and the terminal device include a radio resource control (radio resource control, RRC) layer. A computing transmission control function and a computing execution control function may be implemented via the RRC layers of the access network device and the terminal device. Optionally, the access network device and the terminal device may further include but are not limited to one or more of the following protocol layers: a packet data convergence protocol (packet data convergence protocol, PDCP) layer, a radio link control (radio link control, RLC) protocol layer, a media access control (media access control, MAC) protocol layer, and a physical (physical, PHY layer).

As shown in (b) in FIG. 3, in a top-to-bottom order, both a core network element and an access network device include a next generation application protocol (next generation application protocol, NG-AP) layer. A computing transmission control function and a computing execution control function may be implemented via the NG-AP layers of the core network element and the access network device. Optionally, the core network element and the access network device may further include but are not limited to one or more of the following protocol layers: a stream control transmission protocol (stream control transmission protocol, SCTP) layer, a transmission control protocol (transmission control protocol, TCP) layer, an internet protocol (internet protocol, IP) layer, a data link layer (data link layer, DLL), and a physical layer (physical layer, PHY).

As shown in (c) in FIG. 3, in a top-to-bottom order, protocol layers of both access network devices include an Xn application protocol (Xn application protocol, Xn-AP) layer. A computing transmission control function and a computing execution control function may be implemented via the Xn-AP layers of both the access network devices. Optionally, the access network devices may further include but are not limited to one or more of the following protocol layers: an SCTP layer, a TCP layer, an IP layer, a DLL layer, and a PHY layer.

In this way, a computing transmission control function and a computing execution control function are introduced to a control plane, so that a network and a computing power can be converged on the control plane, and computing can respond to terminal movement and a network change in a timely manner.

It should be noted that FIG. 3 is merely the example of the protocol architecture schematic according to an embodiment of this application, and the protocol architecture schematic may further include another protocol layer.

In a possible design method, the computing system may be mobile/multi-access edge computing (mobile/multi-access edge computing, MEC).

The MEC is a platform that provides a cloud computing capability for a mobile user (for example, a terminal device) in an access network close to the user. The MEC may be considered as a cloud server that runs at an edge of a mobile communication network and runs a specific task.

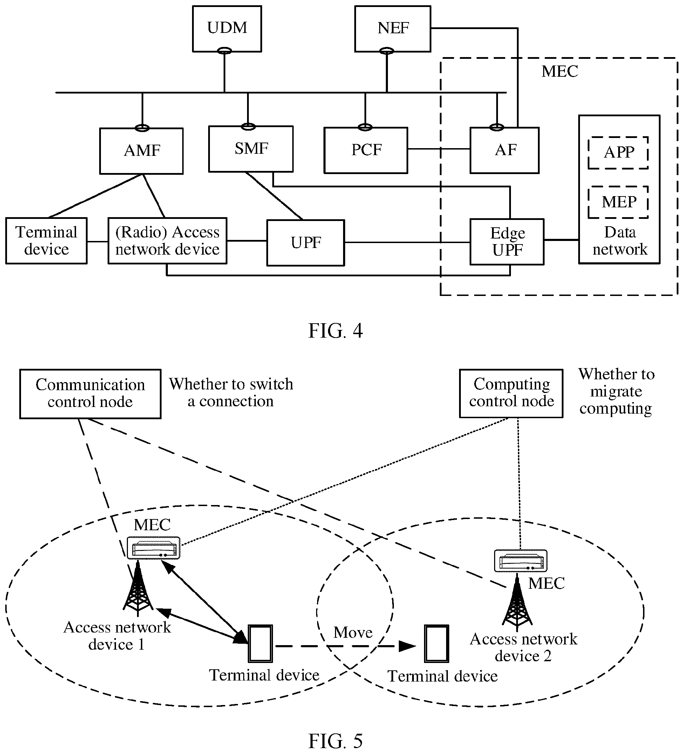

FIG. 4 is a schematic of an architecture of a mobile communication system and a computing system according to an embodiment of this application.

As shown in FIG. 4, the MEC may include an edge UPF, a data network, and an AF. The data network may include a mobile/multi-access edge computing platform (mobile/multiaccess edge platform, MEP) and an application (application). The MEC is not logically in the architecture of the mobile communication network. The mobile communication network and an MEC management control system need to exchange information about the mobile communication network and computing-related information via an NEF, and need to exchange data via a UPF.

In a process of performing service optimization deployment or adjustment by comprehensively considering the information about the mobile communication network and the computing-related information, the mobile communication network system and the computing system need to exchange information through an open interface. For example, the mobile communication network system obtains the computing-related information from the computing system via an NEF network element, and deploys or adjusts, based on the computing-related information, communication corresponding to a service. The MEC management control system obtains the information (such as a session congestion status, a congestion level, and a guaranteed rate) about the mobile communication network from the mobile communication network system via the NEF network element, and deploys or adjusts, based on the information about the mobile communication network, computing corresponding to a service. An interaction delay between the mobile communication network system and the computing system is large. As a result, it takes a long time to deploy corresponding computing and communication, and it takes a long time to provide a converged service of wireless communication and computing for a user, thereby reducing user experience of responding to a general computing service request. Alternatively, when a connection or computing of a user transiently changes (for example, an air interface channel status changes, storage required for computing overflows, or the battery is running out), it takes a long time to adjust the computing or connection, thereby deteriorating user experience of a general computing service.

It should be noted that, for the UPF network element, the AMF network element, the SMF network element, the PCF network element, the UDM network element, and the like in FIG. 4, refer to corresponding descriptions in FIG. 2. Details are not described herein again.

FIG. 5 is a schematic of a collaborative computing scenario according to an embodiment of this application.

With reference to FIG. 5, in a scenario in which a terminal device and an access network device perform collaborative computing, the method shown in FIG. 4 is used. A communication control node in a mobile communication system controls communication, and a computing control node in a computing system controls computing. When the terminal device moves from a cell of an access network device 1 to a cell of an access network device 2, the communication control node needs to determine whether to switch a connection of the terminal device, for example, whether to switch a connection between the terminal device and the access network device 1 to a connection between the terminal device and the access network device 2, and the computing control node determines whether to migrate computing of the terminal device, for example, whether to migrate computing related to the terminal device on the access network device 1 to the access network device 2. Because the mobile communication system and the computing system belong to two different systems in terms of a logical architecture and a control mechanism, a delay of interaction between the communication control node and the computing control node is large, and movement of the terminal device and a network change cannot be responded to in a timely manner. Consequently, handover of the terminal device affects quality of service.

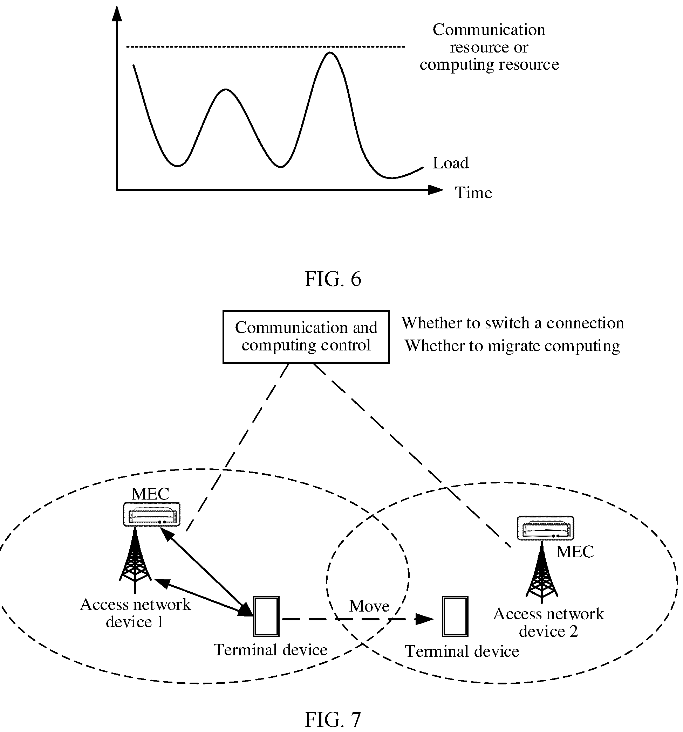

FIG. 6 is a schematic of a type of resource allocation according to an embodiment of this application.

According to the method shown in FIG. 4, because the mobile communication system and the computing system belong to two different systems in terms of a logical architecture and a control mechanism, a delay of interaction between the mobile communication network system and the computing system is large, and computing-related information and communication-related information need to be exchanged to adapt to a service change. As a result, a resource cannot match an actual service load change in a timely manner during resource allocation. To enable an allocated resource to meet the actual service load change, a communication resource and/or a computing resource are/is allocated based on a peak load. As shown in FIG. 6, an allocated communication resource and/or computing resource is constant and greater than the peak load, which results in low resource utilization.

According to the communication method provided in embodiments of this application, a convergence orchestration unit obtains service request information for requesting a first computing service, sends a computing requirement corresponding to the first computing service to a computing execution control unit, and sends a communication requirement corresponding to the first computing service to a computing transmission control unit. The computing execution control unit sends a computing parameter to a computing unit, the computing transmission control unit sends a transmission parameter to the computing unit, and the computing unit performs computing processing based on the computing parameter and the transmission parameter. In this way, information does not need to be exchanged through an open interface in computing control and communication control. An interaction delay is small. This can resolve a problem that a wireless communication service and a computing service can be provided for a user only when a delay is large, thereby improving user experience. For details of the communication method provided in embodiments of this application, refer to FIG. 10 to FIG. 12 below.

FIG. 7 is a schematic of another collaborative computing scenario according to an embodiment of this application.

With reference to FIG. 7, in a scenario in which a terminal device and an access network device perform collaborative computing, a method shown in FIG. 10 to FIG. 12 in this application is used. Information does not need to be exchanged through an open interface in computing control and communication control. When the terminal device moves from a cell of an access network device 1 to a cell of an access network device 2, it is not required to exchange information through an open interface to determine whether to switch a connection of the terminal device or determine whether to migrate computing of the terminal device. A delay of determining whether to switch a connection of the terminal device and determining whether to migrate computing of the terminal device is small, and movement of the terminal device and a network change can be responded to in a timely manner.

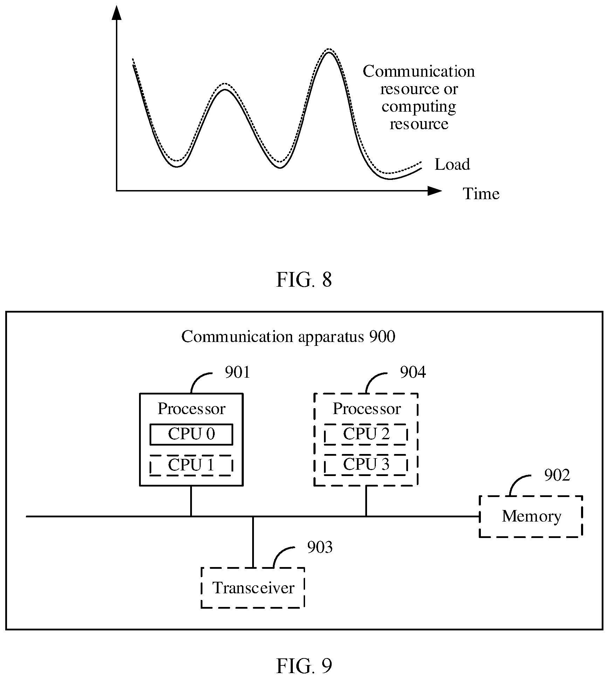

FIG. 8 is a schematic of another type of resource allocation according to an embodiment of this application.

According to the following methods shown in FIG. 10 to FIG. 12 in this application, information does not need to be exchanged through an open interface in computing control and communication control, and resource allocation can match an actual service load change in a timely manner. In this way, a communication resource and/or a computing resource may be allocated based on the actual service load. As shown in FIG. 8, an allocated communication resource and/or computing resource may be adjusted based on an actual service load change, and the allocated resource can not only meet a requirement of the actual service load, but also have high resource utilization.

FIG. 9 is a schematic of a structure of a communication apparatus 900 that may be configured to perform the communication methods provided in embodiments of this application. The communication apparatus 900 may be a convergence orchestration unit, a convergence anchor, a convergence scheduling unit, a control unit, a computing execution control unit, or a computing transmission control unit, or may be a chip or another component used in the convergence orchestration unit, the convergence anchor, the convergence scheduling unit, the control unit, the computing execution control unit, or the computing transmission control unit.

As shown in FIG. 9, the communication apparatus 900 may include a processor 901. Optionally, the communication apparatus 900 may further include either or both of a memory 902 and a transceiver 903. The processor 901 and either or both of the memory 902 and the transceiver 903 may be coupled, for example, may be connected through a communication bus; or the processor 901 may be used independently.

The following specifically describes various components of the communication apparatus 900 with reference to FIG. 9.

The processor 901 is a control center of the communication apparatus 900, and may be one processor or may be a collective term of a plurality of processing elements. For example, the processor 901 is one or more central processing units CPUs, may be an application-specific integrated circuit (application-specific integrated circuit, ASIC), or may be configured as one or more integrated circuits implementing embodiments of this application, for example, one or more microprocessors (digital signal processors, DSPs) or one or more field programmable gate arrays (field programmable gate arrays, FPGAs).

The processor 901 may run or execute a software program stored in the memory 902 and invoke data stored in the memory 902, to perform various functions of the communication apparatus 900.

In a specific implementation, in an embodiment, the processor 901 may include one or more CPUs, for example, a CPU 0 and a CPU 1 that are shown in FIG. 9.

In a specific implementation, in an embodiment, the communication apparatus 900 may alternatively include a plurality of processors, for example, the processor 901 and a processor 904 shown in FIG. 9. Each of the processors may be a single-core (single-CPU) processor, or may be a multi-core (multi-CPU) processor. The processor herein may be one or more communication devices, circuits, and/or processing cores configured to process data (for example, computer program instructions).

The memory 902 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM), another compact disc storage, optical disc storage (including a compact disc, a laser disc, an optical disc, a digital versatile disc, a Blu-ray disc, or the like), magnetic disk storage medium or another magnetic storage communication device, or any other medium that can be used for carrying or storing expected program code in a form of an instruction or a data structure and that can be accessed by a computer. However, the memory is not limited thereto. The memory 902 may be integrated with the processor 901, or may exist independently, and is coupled to the processor 901 through an input/output port (not shown in FIG. 9) of the communication apparatus 900. This is not specifically limited in embodiments of this application.

The memory 902 is configured to store a software program for executing a solution of this application, and the processor 901 controls the execution of the software program. For the specific implementation, refer to the following method embodiment. Details are not described herein again.

The transceiver 903 is configured to communicate with another communication apparatus. For example, the communication apparatus 900 is a data orchestration network element, and the transceiver 903 may be configured to communicate with a service request network element, a convergence anchor, a convergence scheduling unit, a control unit, a computing execution control unit, and/or a computing transmission control unit. For another example, the communication apparatus 900 is a convergence anchor, and the transceiver 903 may be configured to communicate with a service request network element, a data orchestration network element, a convergence scheduling unit, a control unit, a computing execution control unit, and/or a computing transmission control unit. Details are not described one by one. In addition, the transceiver 903 may include a receiver and a transmitter (which are not separately shown in FIG. 9). The receiver is configured to implement a receiving function, and the transmitter is configured to implement a sending function. The transceiver 903 may be integrated with the processor 901, or may exist independently, and is coupled to the processor 901 through the input/output port (not shown in FIG. 9) of the communication apparatus 900. This is not specifically limited in embodiments of this application.

It should be noted that the structure of the communication apparatus 900 shown in FIG. 9 does not constitute a limitation on the communication apparatus. An actual communication apparatus may include more or fewer components than those shown in the figure, or combine some components, or have different component arrangement.

The following specifically describes the communication method provided in embodiments of this application with reference to FIG. 10 to FIG. 12. FIG. 10 to FIG. 12 are described by using a convergence orchestration unit, a computing execution control unit, a computing transmission control unit, a computing unit, and/or a service request unit as an example. There may be one or more computing execution control units, there may be one or more computing transmission control units, and there may be one or more computing units.

For example, it is assumed that there are a plurality of computing execution control units, a plurality of computing transmission control units, and a plurality of computing units. A part of computing execution control units may be deployed on an access network device, and the other part of computing execution control units may be deployed on a core network. A part of computing transmission control units may be deployed on the access network device, and the other part of computing transmission control units may be deployed on the core network. A part of computing units may be deployed on the access network device, a part of computing units may be deployed on the core network, and the other part of computing units may be deployed on a terminal device.

In this way, the access network device may perform functions of the computing execution control unit, the computing transmission control unit, and the computing unit, a core network element may perform functions of the computing execution control unit, the computing transmission control unit, and the computing unit. The terminal device may perform functions of the following computing unit.

For example, FIG. 10 is a schematic flowchart of a communication method according to an embodiment of this application. In FIG. 10, an example in which a convergence orchestration unit performs computing and communication orchestration is used for description.

As shown in FIG. 10, the communication method includes the following steps.

S1001: The convergence orchestration unit obtains service request information.

For example, the service request information may be for requesting a first computing service.

For example, the first computing service may include but is not limited to one or more of the following: federated learning, splitting reasoning, and network planning and optimization.

Optionally, S1001 may include S1001a: A service request unit sends the service request information to the convergence orchestration unit. Correspondingly, the convergence orchestration unit receives the service request information from the service request unit.

For example, the service request unit may be a computing unit, a third-party application, or an application server.

In other words, the service request unit may request the first computing service from the convergence orchestration unit.

Optionally, S1001 may include: The convergence orchestration unit generates the service request information. For example, the convergence orchestration unit automatically triggers the computing service, namely, network planning and optimization.

In some embodiments, the method provided in this embodiment of this application may further include step a: The convergence orchestration unit may determine computing requirement information based on a service level requirement of the first computing service.

For example, the service level requirement of the first computing service may be a service level agreement (service level agreement, SLA) requirement corresponding to the first computing service. The service level requirement of the first computing service may be understood as an overall requirement of the first computing service.

Optionally, the service level requirement of the first computing service may be predefined in a protocol, and is preconfigured in the convergence orchestration unit.

For example, the convergence orchestration unit stores a mapping relationship between a computing service and a service level requirement, and may obtain, based on the first computing service and the mapping relationship between a computing service and a service level requirement, the service level requirement corresponding to the first computing service.

Alternatively, optionally, a mapping relationship between a service level and a service level requirement is preconfigured in the convergence orchestration unit.

For example, the service request information may further include a service level corresponding to the first computing service. The convergence orchestration unit obtains the service level requirement of the first computing service based on the service level corresponding to the first computing service and the correspondence between a service level and a service level requirement. For example, the service level may be an integer from 0 to 10.

For another example, the mapping relationship between a service level and a service level requirement and a mapping relationship between a computing service and a service level are preconfigured in the convergence orchestration unit. The convergence orchestration unit obtains the service level requirement of the first computing service based on the first computing service, the mapping relationship between a service level and a service level requirement, and the mapping relationship between a computing service and a service level.

For example, the convergence orchestration unit may obtain a computing-related requirement based on the service level requirement of the first computing service.

Optionally, it is assumed that there are two computing execution control units, a computing execution control unit 1 is deployed on a core network, and a computing execution control unit 2 is deployed on an access network device. The convergence orchestration unit may determine, based on the service level requirement of the first computing service, computing requirement information corresponding to the core network and computing requirement information corresponding to the access network.

In some other embodiments, the convergence orchestration unit may determine the computing requirement information in a manner recorded in step c and step d in the following S1005.

In some embodiments, the method provided in this embodiment of this application may further include step b: The convergence orchestration unit may determine transmission requirement information based on the service level requirement of the first computing service.

Optionally, it is assumed that there are two computing transmission control units, a computing transmission control unit 1 is deployed on a core network, and a computing transmission control unit 2 is deployed on an access network device. The convergence orchestration unit may determine, based on the service level requirement of the first computing service, transmission requirement information corresponding to the core network and transmission requirement information corresponding to the access network.

For example, the convergence orchestration unit may obtain a transmission-related requirement based on the service level requirement of the first computing service.

In some other embodiments, the convergence orchestration unit may determine the transmission requirement information in a manner recorded in the following S 1007 and S 1008.

It should be noted that in this application, there may be a plurality of manners of obtaining the computing requirement information and the transmission requirement information. For example, in a manner 1, step a and step b are performed. For example, in a manner 2, step a, and the following S1007 and S1008 are performed. For example, in a manner 3, step b, and the following step c and step d are performed.

S1002: The convergence orchestration unit sends the computing requirement information to a computing execution control unit. Correspondingly, the computing execution control unit receives the computing requirement information from the convergence orchestration unit.

In other words, the computing execution control unit may obtain the computing requirement information from the convergence orchestration unit.

Optionally, it is assumed that there are two computing execution control units, a computing execution control unit 1 is deployed on a core network, and a computing execution control unit 2 is deployed on an access network device. The convergence orchestration unit may send computing requirement information corresponding to the core network to the computing execution control unit 1, and send computing requirement information corresponding to the access network to the computing execution control unit 2. A sequence is not limited.

For example, the computing requirement information may indicate a computing requirement corresponding to the first computing service.

Optionally, the computing requirement information may include a computing resource requirement, a computing quality of service requirement, and/or the like.

Optionally, the computing resource requirement may include but is not limited to one or more of the following: a computing resource size requirement and/or a storage size requirement.

Optionally, the computing quality of service requirement may include but is not limited to one or more of the following: a requirement for a computing processing mode, a requirement for computing processing precision, and a requirement for computing processing time.

For example, the computing processing mode may be a processing mode of computing resources, and the computing processing mode may include a serial mode and/or a parallel mode.

For example, a computing processing mode of a computing resource 1 and a computing resource 2 is serial. For example, the computing resource 1 is first used, and then the computing resource 2 is used. A computing processing mode of the computing resource 1 and a computing resource 3 is parallel. A computing step 1 and a computing step 3 may be performed at the same time.

For example, the computing processing precision may be a quantity of bits used for computing. For example, processing precision such as 1 bit, 8 bits, 16 bits, or 32 bits is used.

For example, the computing processing time may refer to a delay for performing computing.

In some embodiments, the communication method provided in this embodiment of this application may further include: The computing execution control unit obtains an identifier of the first computing service.

For example, the identifier of the first computing service may correspond to the computing requirement information.

For example, that the computing execution control unit obtains an identifier of the first computing service may include: The convergence orchestration unit sends the identifier of the first computing service to the computing execution control unit. Correspondingly, the computing execution control unit receives the identifier of the first computing service from the convergence orchestration unit.

Optionally, it is assumed that there are two computing transmission control units, a computing transmission control unit 1 is deployed on a core network, and a computing transmission control unit 2 is deployed on an access network device. The convergence orchestration unit may send the identifier of the first computing service to the computing execution control unit 1, and send the identifier of the first computing service to the computing execution control unit 2. A sequence is not limited.

It should be noted that, that the computing execution control unit receives the identifier of the first computing service from the convergence orchestration unit and S1002 (the computing execution control unit receives the computing requirement information from the convergence orchestration unit) may be performed in a same step or separately. This is not limited in this application.

S1003: The convergence orchestration unit sends the transmission requirement information to a computing transmission control unit. Correspondingly, the computing transmission control unit receives the transmission requirement information from the convergence orchestration unit.

In other words, the computing transmission control unit may obtain the transmission requirement information from the convergence orchestration unit.

Optionally, it is assumed that there are two computing transmission control units, a computing transmission control unit 1 is deployed on a core network, and a computing transmission control unit 2 is deployed on an access network device. The convergence orchestration unit may send execution requirement information corresponding to the core network to the computing execution control unit 1, and send execution requirement information corresponding to the access network to the computing execution control unit 2. A sequence is not limited.

For example, the transmission requirement information may indicate a communication requirement corresponding to the first computing service.

Optionally, the transmission requirement information includes a communication resource requirement, a communication quality of service requirement, and/or the like.

Optionally, the communication resource requirement may include but is not limited to one or more of the following: a communication resource size requirement and/or a storage size requirement.

Optionally, the communication quality of service requirement may include but is not limited to one or more of the following: a bandwidth requirement and/or a delay requirement.

For example, the communication quality of service requirement may include but is not limited to one or more of the following: a bandwidth requirement and/or a delay requirement of logically adjacent computing units. The logically adjacent computing units may be managed by a same computing transmission control unit, or may be managed by different computing transmission control units.

In some embodiments, the communication method provided in this embodiment of this application may further include: The computing transmission control unit obtains an identifier of the first computing service.

For example, the identifier of the first computing service may correspond to the computing requirement information.

For example, that the computing transmission control unit obtains an identifier of the first computing service may include: The convergence orchestration unit sends the identifier of the first computing service to the computing transmission control unit. Correspondingly, the computing transmission control unit receives the identifier of the first computing service from the convergence orchestration unit.

It should be noted that, that the computing transmission control unit receives the identifier of the first computing service from the convergence orchestration unit and S1003 (the computing transmission control unit receives the transmission requirement information from the convergence orchestration unit) may be performed in a same step or separately. This is not limited in this application.

It should be noted that a sequence of S1002 and S 1003 is not limited in this application.

S1004: The computing execution control unit sends computing parameter configuration information to a computing unit. Correspondingly, the computing unit receives the computing parameter configuration information from the computing execution control unit.

Optionally, it is assumed that there are two computing execution control units, a computing execution control unit 1 is deployed on a core network, and a computing execution control unit 2 is deployed on an access network device. The computing execution control unit 1 may send corresponding computing parameter configuration information to a computing unit managed by the computing execution control unit 1, and the computing execution control unit 2 may send corresponding computing parameter configuration information to a computing unit managed by the computing execution control unit 2. A sequence is not limited.

The computing unit managed by the computing execution control unit 1 may include a computing unit deployed on the core network and a computing unit deployed on the access network device. The computing unit managed by the computing execution control unit 2 may include a computing unit deployed on the access network device and a computing unit deployed on a terminal device.

For example, the computing parameter configuration information may indicate a computing parameter of the computing unit.

In this way, the computing unit may perform computing based on the computing parameter configuration information.

In some embodiments, the computing parameter configuration information may include a configuration of a computing resource, a configuration of computing quality of service, and/or the like.

Optionally, the configuration of the computing resource may include but is not limited to one or more of the following: a size of the computing resource and/or a storage size.

Optionally, the configuration of the computing quality of service may include but is not limited to one or more of the following: a computing processing mode, computing processing precision, and computing processing time.

It should be noted that, the computing parameter configuration information is similar to the computing requirement information. For specific implementations of the size of the computing resource, the storage size, the computing processing mode, the computing processing precision, and the computing processing time, refer to corresponding descriptions in S1002. Details are not described herein again.

In some embodiments, the computing parameter configuration information may be determined by the computing execution control unit based on the computing requirement information and computing capability information.

Optionally, the computing capability information may include a computing capability of one or more computing units.

For example, the one or more computing units may be all or a part of computing units managed (or controlled) by the computing execution control unit.

For example, the computing execution control unit can select at least one computing unit from the one or more computing units based on the computing requirement information and the computing capability of the one or more computing units, and determine computing parameter configuration information separately corresponding to the at least one computing unit.

The computing capability of the at least one computing unit can meet the computing requirement corresponding to the first computing service, and the computing parameter configuration information separately corresponding to the at least one computing unit can meet or implement the computing requirement corresponding to the first computing service.

Optionally, the computing execution control unit may determine identification information of the at least one selected computing unit, for example, an identifier or an address.

For example, it is assumed that the at least one selected computing unit includes a computing unit deployed on a terminal device, a computing unit deployed on an access network device, and a computing unit deployed on a core network element. The computing execution control unit may obtain identification information of the terminal device, the access network device, and the core network element, to send the computing parameter configuration information.

Optionally, the computing execution control unit may determine a sequence in which the at least one selected computing unit performs computing. The computing execution control unit may send, to the computing unit, a sequence in which the computing unit performs computing.

For example, the computing parameter configuration information may include a sequence in which the computing unit performs computing.

For example, the computing execution control unit manages a computing unit 1, a computing unit 2, and a computing unit 3. Assuming that a combination of a computing capability of the computing unit 1 and a computing capability of the computing unit 2 can meet the computing requirement corresponding to the first computing service, the computing execution control unit selects the computing unit 1 and the computing unit 2 to implement the computing requirement corresponding to the first computing service, and determines the computing parameter configuration information 1 of the computing unit 1 and the computing parameter configuration information 2 of the computing unit 2. A sequence of performing computing by the computing unit 1 and the computing unit 2 may be further determined. For example, after performing computing, the computing unit 1 sends obtained computing data to the computing unit 2, and the computing unit 2 continues to perform computing.

In this way, the computing unit 1 performs computing based on the computing parameter configuration information 1, and the computing unit 2 performs computing based on the computing parameter configuration information 2, so that the computing requirement corresponding to the first computing service can be implemented.

In a possible design, the method provided in this application may further include S1007 and S1008.

S1007: The computing execution control unit sends computing scheduling information to the convergence orchestration unit. Correspondingly, the convergence orchestration unit receives the computing scheduling information from the computing execution control unit.

Optionally, it is assumed that there are two computing execution control units, a computing execution control unit 1 is deployed on a core network, and a computing execution control unit 2 is deployed on an access network device. Both the computing execution control unit 1 and the computing execution control unit 2 may perform steps S1007 and S1008.

Optionally, the computing scheduling information may include the computing parameter configuration information separately corresponding to the at least one computing unit and the identifier of the at least one computing unit.

It should be noted that a sequence of S1007 and S 1004 is not limited in this application.

S1008: The convergence orchestration unit determines the transmission requirement information based on the service level requirement of the first computing service and the computing scheduling information.

Optionally, it is assumed that there are two computing execution control units, a computing execution control unit 1 is deployed on a core network, and a computing execution control unit 2 is deployed on an access network device. The convergence orchestration unit determines transmission requirement information of the core network based on the service level requirement of the first computing service and computing scheduling information of the computing execution control unit 1, and the convergence orchestration unit determines transmission requirement information of the access network based on the service level requirement of the first computing service and computing scheduling information of the computing execution control unit 2.

It should be noted that, for an implementation of the service level requirement of the first computing service, refer to corresponding descriptions in S1001. Details are not described herein again.

For example, the convergence orchestration unit may determine, based on the service level requirement of the first computing service and the computing parameter configuration information corresponding to the at least one computing unit, transmission requirement information corresponding to the at least one computing unit.

In other words, the computing execution control unit may send the at least one selected computing unit and the corresponding computing parameter configuration information to the convergence orchestration unit. The convergence orchestration unit can accurately determine the transmission requirement information based on an overall requirement (the service level requirement of the first computing service) and a computing scheduling result (the computing parameter configuration information corresponding to the at least one computing unit).

Optionally, the convergence orchestration unit may determine a computing transmission control unit that manages the at least one computing unit (the at least one computing unit selected by the computing execution control unit), and send the transmission requirement information to the computing transmission control unit that manages the at least one computing unit.

It should be noted that, when the method provided in this application includes S1007 and S1008, S1003 may be performed after S1008.

S1005: The computing transmission control unit sends transmission parameter configuration information to the computing unit. Correspondingly, the computing unit receives the transmission parameter configuration information from the computing transmission control unit.

Optionally, it is assumed that there are two computing transmission control units, a computing transmission control unit 1 is deployed on a core network, and a computing transmission control unit 2 is deployed on an access network device. The computing transmission control unit 1 may send corresponding transmission parameter configuration information to a computing unit managed by the computing transmission control unit 1, and the computing transmission control unit 2 may send corresponding transmission parameter configuration information to a computing unit managed by the computing transmission control unit 2. A sequence is not limited.

The computing unit managed by the computing transmission control unit 1 may include a computing unit deployed on the core network and a computing unit deployed on the access network device. The computing unit managed by the computing transmission control unit 2 may include a computing unit deployed on the access network device and a computing unit deployed on a terminal device.

For example, the transmission parameter configuration information may indicate a communication parameter of the computing unit.

Optionally, the computing transmission control unit may manage a computing session or a computing bearer between computing units based on the transmission parameter configuration information.

In this way, the computing unit may perform computing based on the transmission parameter configuration information.

In some embodiments, the transmission parameter configuration information may include a configuration of a communication resource, a configuration of communication quality of service, and/or the like.

Optionally, the configuration of the communication resource may include but is not limited to one or more of the following: a size of the communication resource.

Optionally, the configuration of the communication quality of service may include but is not limited to one or more of the following: bandwidth and/or a delay. A communication bandwidth requirement and a communication delay requirement can be ensured.

For example, the configuration of the communication quality of service may include but is not limited to one or more of the following: bandwidth and/or a delay of logically adjacent computing units. The logically adjacent computing units may be managed by a same computing transmission control unit, or may be managed by different computing transmission control units.

In some embodiments, the transmission parameter configuration information may be determined by the computing transmission control unit based on the transmission requirement information and transmission capability information.

Optionally, the transmission capability information may include a communication capability of one or more computing units.

For example, the one or more computing units may be all or a part of computing units managed (or controlled) by the computing transmission control unit.

Optionally, the transmission capability information may include a communication capability of at least one computing unit. The at least one computing unit in the transmission capability information may be at least one computing unit selected by the computing execution control unit. For example, the computing execution control unit selects the at least one computing unit from the one or more computing units based on the computing requirement information and a computing capability of the one or more computing units. For details, refer to the corresponding descriptions in S1004.

For example, the computing transmission control unit may determine, based on the transmission requirement information and a communication capability of the at least one computing unit, transmission parameter configuration information separately corresponding to the at least one computing unit. The communication capability of the at least one computing unit can meet the communication requirement corresponding to the first computing service, and the transmission parameter configuration information separately corresponding to the at least one computing unit can meet or implement the communication requirement corresponding to the first computing service. It should be noted that the at least one computing unit may be at least one computing unit selected by the computing execution control unit (corresponding to a case in which the convergence orchestration unit determines the transmission requirement information based on the service level requirement of the first computing service and the computing scheduling information), or may be selected by the computing transmission control unit from one or more computing units based on the transmission requirement information and a communication capability of the one or more computing units (corresponding to a case in which the convergence orchestration unit determines the computing requirement information based on the service level requirement of the first computing service and transmission scheduling information).

In this way, the at least one computing unit performs communication based on the transmission parameter configuration information, for example, transmits computing data, so that the communication requirement corresponding to the first computing service can be implemented.

In a possible design, the method provided in this application may further include step c and step d.

Step c: The computing transmission control unit sends transmission scheduling information to the convergence orchestration unit. Correspondingly, the convergence orchestration unit receives the transmission scheduling information from the computing transmission control unit.

Optionally, it is assumed that there are two computing transmission control units, a computing transmission control unit 1 is deployed on a core network, a computing transmission control unit 2 is deployed on an access network device, and both the computing transmission control unit 1 and the computing transmission control unit 2 may perform step c and step d.

Optionally, the transmission scheduling information includes the transmission parameter configuration information separately corresponding to the at least one computing unit and the identifier of the at least one computing unit.

It should be noted that a sequence of step c and S1005 is not limited in this application.

Step d: The convergence orchestration unit determines the computing requirement information based on the service level requirement of the first computing service and the transmission scheduling information.

Optionally, it is assumed that there are two computing transmission control units, a computing transmission control unit 1 is deployed on a core network, and a computing transmission control unit 2 is deployed on an access network device. The convergence orchestration unit determines computing requirement information of the core network based on the service level requirement of the first computing service and transmission scheduling information of the computing transmission control unit 1, and the convergence orchestration unit determines computing requirement information of the access network based on the service level requirement of the first computing service and transmission scheduling information of the computing transmission control unit 2.

For an implementation of the service level requirement of the first computing service, refer to the corresponding descriptions in S1001. Details are not described herein again.

For example, the convergence orchestration unit may determine, based on the service level requirement of the first computing service and the transmission parameter configuration information corresponding to the at least one computing unit, computing requirement information corresponding to the at least one computing unit.

In other words, the computing execution control unit may send the at least one selected computing unit and the corresponding transmission parameter configuration information to the convergence orchestration unit. The convergence orchestration unit can accurately determine the computing requirement information based on an overall requirement (the service level requirement of the first computing service) and a transmission scheduling result (the transmission parameter configuration information corresponding to the at least one computing unit).

Optionally, the convergence orchestration unit may determine a computing transmission control unit that manages the at least one computing unit (the at least one computing unit selected by the computing execution control unit), and send the transmission requirement information to the computing transmission control unit that manages the at least one computing unit.

It should be noted that, when the method provided in this application includes step c and step d, S1002 may be performed after step d. For example, S1001, S1003, step c, step d, and S1002 may be sequentially performed.

S1006: The computing unit performs computing processing based on the computing parameter configuration information and the transmission parameter configuration information.

For example, the computing unit may perform computing based on the computing parameter configuration information, and perform communication based on the transmission parameter configuration information.

Optionally, a plurality of computing units may perform collaborative computing on the computing parameter configuration information and the transmission parameter configuration information.

For example, a computing unit 2 receives computing data (original data or processed intermediate data) from a computing unit 1 based on the transmission parameter configuration information and a sequence in which computing units perform computing, and performs computing on the computing data based on the computing parameter configuration information. Optionally, the computing unit 2 may further send, to a computing unit 3 based on the transmission parameter configuration information and the sequence in which the computing units perform computing, the computing data obtained by the computing unit 2.

Based on the communication method shown in FIG. 10, the convergence orchestration unit obtains the service request information for requesting the first computing service, sends the computing requirement corresponding to the first computing service to the computing execution control unit, and sends the communication requirement corresponding to the first computing service to the computing transmission control unit. The computing execution control unit sends the computing parameter to the computing unit, the computing transmission control unit sends the transmission parameter to the computing unit, and the computing unit performs computing processing based on the computing parameter and the transmission parameter. In this way, in the solution shown in FIG. 4, information needs to be exchanged between the mobile communication network and the MEC management control system through an open interface (for example, an NEF network element). An interaction delay is large. In the method shown in FIG. 10, information is directly exchanged in computing control and communication control processes, for example, the convergence orchestration unit and the computing execution control unit directly exchange a computing requirement or the like, and information does not need to be exchanged through an open interface. An interaction delay is small. This can resolve a problem that a wireless communication service and a computing service can be provided for a user only when a delay is large, thereby improving user experience.

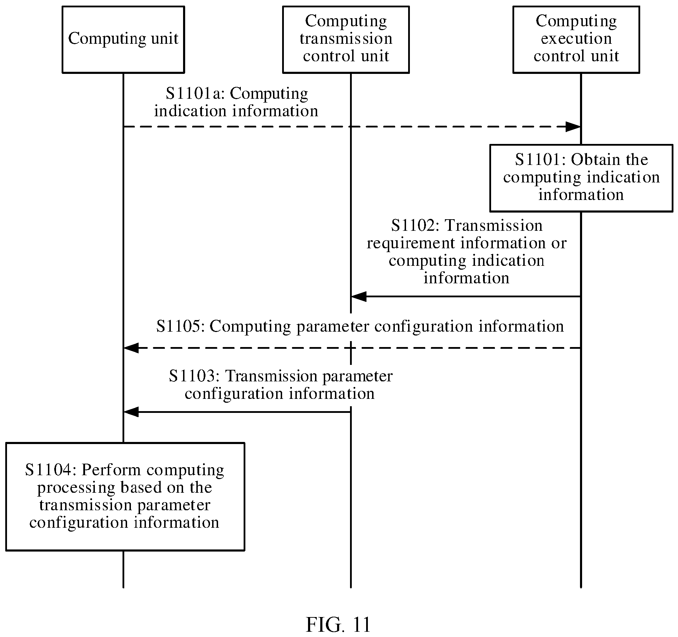

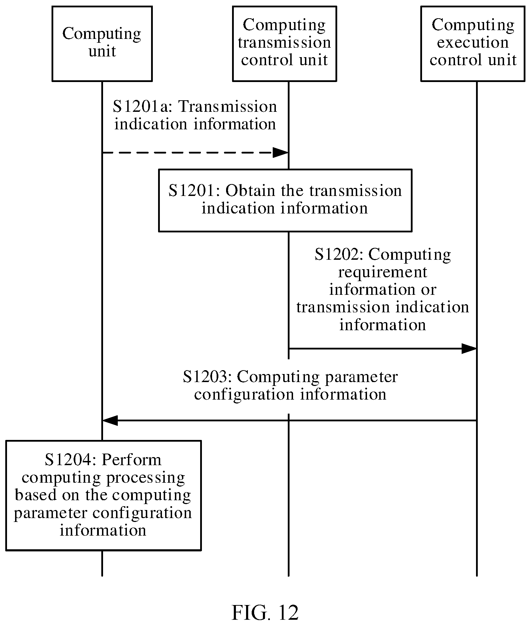

For example, FIG. 11 is a schematic flowchart of another communication method according to an embodiment of this application. A difference between FIG. 11 and FIG. 10 lies in that the method shown in FIG. 11 does not require a convergence orchestration unit to perform computing orchestration or communication orchestration. A difference between FIG. 11 and FIG. 12 lies in that the method shown in FIG. 11 may be applicable to a scenario in which a communication status is requested to be adjusted based on a current computing status.

As shown in FIG. 11, the communication method includes the following steps.

S1101: A computing execution control unit obtains computing indication information.

For example, the computing indication information may indicate to request a first computing service, or indicate a current computing parameter of a computing unit.

For example, the first computing service may be a computing service, for example, network planning and optimization, predefined on a network side (for example, an access network device or a core network element).

For example, the computing indication information may indicate a computing resource status or a computing resource event of the computing unit, for example, time within which computing has been performed, an electricity quantity, and a size of occupied storage.

In a possible design, S1101 may include S1101a: The computing unit sends the computing indication information to the computing execution control unit. Correspondingly, the computing execution control unit receives the computing indication information from the computing unit.

To be specific, the first computing service may be requested by the computing unit, or the computing unit may send a current computing status to the computing execution control unit, to request to adjust a communication parameter.

For example, the computing unit that sends the computing indication information to the computing execution control unit may be a computing unit deployed on a terminal device. Optionally, the computing execution control unit may be deployed on a core network, or deployed on an access network device.

In a possible design, the computing execution control unit is a first computing execution control unit. The method provided in this embodiment of this application may further include: The first computing execution control unit sends the computing indication information to a second computing execution control unit. Correspondingly, the second computing execution control unit receives the computing indication information from the first computing execution control unit.

For example, the first computing execution control unit is a computing execution control unit deployed on an access network device. After obtaining the computing indication information, the first computing execution control unit may send the computing indication information to the second computing execution control unit. For example, the second computing execution control unit may be a computing execution control unit deployed on a core network.

In another possible design, the computing execution control unit is a second computing execution control unit. S1101 may include: A first computing execution control unit sends the computing indication information to the second computing execution control unit. Correspondingly, the second computing execution control unit receives the computing indication information from the first computing execution control unit.

To be specific, the computing execution control unit (for example, the second computing execution control unit) may obtain the computing indication information from another computing execution control unit (for example, the first computing execution control unit).

It should be noted that, after obtaining the computing indication information from the another computing execution control unit, the computing execution control unit may perform related steps of the computing execution control unit in the method shown in FIG. 11.

In other words, the method shown in FIG. 11 may include that the first computing execution control unit performs related steps of the computing execution control unit in the method shown in FIG. 11, or may include that the second computing execution control unit performs related steps of the computing execution control unit in the method shown in FIG. 11, to provide the first computing service or provide a communication parameter corresponding to a current computing parameter of the computing unit, to adjust communication based on a computing status.

S1102: The computing execution control unit sends transmission requirement information or the computing indication information to a computing transmission control unit. Correspondingly, the computing transmission control unit receives the transmission requirement information or the computing indication information from the computing execution control unit.

Optionally, it is assumed that there are two computing execution control units, a computing execution control unit 1 is deployed on a core network, a computing execution control unit 2 is deployed on an access network device, there are two computing transmission control units, a computing transmission control unit 1 is deployed on the core network, and a computing transmission control unit 2 is deployed on the access network device. The computing execution control unit 1 sends the transmission requirement information or the computing indication information to the computing transmission control unit 1. The computing execution control unit 2 sends the transmission requirement information or the computing indication information to the computing transmission control unit 2.

Optionally, the computing execution control unit and the computing transmission control unit may interact with each other through a first logical interface, and the first logical interface uses a RESTful API interface specification.

For example, RESTful is a design style and a development mode of a network application program, and may be defined in a form of xml or in a JSON format.

For example, the transmission requirement information may indicate a communication requirement corresponding to the computing indication information.

For example, the transmission requirement information may indicate a communication requirement corresponding to the first computing service.

In other words, the computing execution control unit may obtain the transmission requirement information, and send the transmission requirement information to the computing transmission control unit.

Optionally, the transmission requirement information includes a communication resource requirement, a communication quality of service requirement, and/or the like.

It should be noted that, for a specific implementation of the transmission requirement information, refer to the corresponding descriptions in S1003. Details are not described herein again.

In some embodiments, the transmission requirement information may be determined by the computing execution control unit based on the computing indication information and first mapping information.

Optionally, the first mapping information may indicate a correspondence between a computing parameter and a communication parameter.

For example, the first mapping information may indicate a correspondence between one or more computing parameter sets and one or more communication parameter sets. The computing parameter set may include one or more computing parameters, and the communication parameter set may include one or more communication parameters.

The computing parameter set may include but is not limited to one or more of the following: a size of a computing resource, storage, a computing processing mode, computing processing precision, and computing processing time. The communication parameter set may include but is not limited to one or more of the following: a size of a communication resource, bandwidth, and a delay.

For example, the first mapping information may indicate a correspondence between a computing resource and communication quality of service.

For example, the computing execution control unit may maintain the first mapping information, and the first mapping information may be preconfigured.

For example, the computing execution control unit can determine, based on the current computing parameter of the computing unit indicated by the computing indication information and the first mapping information, a communication parameter corresponding to the current computing parameter of the computing unit, to obtain the transmission requirement information.

In some other embodiments, the transmission requirement information may be determined by the computing execution control unit based on the computing indication information, first mapping information, and second mapping information.

Optionally, the second mapping information may indicate a correspondence between a computing service and a computing parameter.

For example, the second mapping information may indicate a computing parameter separately corresponding to one or more computing services, for example, a correspondence between an identifier of one or more computing services and an identifier of a computing parameter.

For example, the computing execution control unit may maintain the second mapping information, and the second mapping information may be preconfigured.

For example, the computing indication information indicates to request the first computing service, and the computing execution control unit can determine, based on the first computing service and the second mapping information, a computing parameter corresponding to the first computing service, determine, based on the first mapping information, a communication parameter corresponding to the computing parameter, and use the communication parameter as the transmission requirement information.

Optionally, the computing execution control unit may determine, based on a first correspondence, a computing transmission control unit that manages a computing unit (for example, the computing unit that sends the computing indication information in S1101a).

For example, the first correspondence includes a correspondence between a computing execution control unit and a computing transmission control unit. For example, the computing execution control unit may maintain the first correspondence.

For example, the computing execution control unit may select, based on the first correspondence and from one or more computing transmission control units corresponding to the computing execution control unit, a computing transmission control unit that manages a computing unit (for example, the computing unit that sends the computing indication information in S1101a).

For example, the computing execution control unit sends the computing indication information to the computing transmission control unit.

To be specific, the computing execution control unit may directly send the computing indication information to the computing transmission control unit. In this way, the computing transmission control unit can obtain the corresponding transmission requirement information based on the computing indication information.

Optionally, the method provided in this application may further include: The computing transmission control unit determines the transmission requirement information based on the computing indication information and first mapping information.

For example, the computing transmission control unit may maintain the first mapping information, and the first mapping information may be preconfigured.

For example, the computing transmission control unit can determine, based on the current computing parameter of the computing unit indicated by the computing indication information and the first mapping information, a communication parameter corresponding to the current computing parameter of the computing unit, and use the communication parameter corresponding to the current computing parameter as the transmission requirement information.

Optionally, the method provided in this application may further include: The computing transmission control unit determines the transmission requirement information based on the computing indication information, first mapping information, and second mapping information.

For example, the computing transmission control unit may maintain the second mapping information, and the second mapping information may be preconfigured.

For example, the computing indication information indicates to request the first computing service, and the computing transmission control unit can determine, based on the first computing service and the second mapping information, a computing parameter corresponding to the first computing service, determine, based on the first mapping information, a communication parameter corresponding to the computing parameter, and use the communication parameter as the transmission requirement information.

In other words, the transmission requirement information may be determined by the computing transmission control unit.

S1103: The computing transmission control unit sends transmission parameter configuration information to the computing unit. Correspondingly, the computing unit receives the transmission parameter configuration information from the computing transmission control unit.

Optionally, it is assumed that there are two computing transmission control units, a computing transmission control unit 1 is deployed on a core network, and a computing transmission control unit 2 is deployed on an access network device. The computing transmission control unit 1 may send corresponding transmission parameter configuration information to a computing unit managed by the computing transmission control unit 1, and the computing transmission control unit 2 may send corresponding transmission parameter configuration information to a computing unit managed by the computing transmission control unit 2. A sequence is not limited.

For example, the transmission parameter configuration information may indicate a communication parameter of the computing unit. For a specific implementation of the transmission parameter configuration information, refer to corresponding descriptions in S1005. Details are not described herein again.

In some embodiments, the transmission parameter configuration information may be determined by the computing transmission control unit based on the transmission requirement information and transmission capability information. For a specific implementation, refer to the corresponding descriptions in S1005. Details are not described herein again.

For example, the computing transmission control unit can select at least one computing unit from one or more computing units based on the transmission requirement information and a communication capability of the one or more computing units, and determine transmission parameter configuration information separately corresponding to the at least one computing unit.

The communication capability of the at least one computing unit can meet the communication requirement corresponding to the first computing service or the current computing parameter of the computing unit, and the transmission parameter configuration information separately corresponding to the at least one computing unit can meet the communication requirement corresponding to the first computing service or the current computing status of the computing unit. The at least one computing unit may include the computing unit that sends the computing indication information, or may not include the computing unit that sends computing indication information.

S1104: The computing unit performs computing processing based on the transmission parameter configuration information.

For example, the computing unit may perform computing based on the current computing parameter of the computing unit, perform communication based on the transmission parameter configuration information, and may further perform collaborative computing with another computing unit.

Optionally, the computing unit managed by the computing transmission control unit 1 and the computing unit managed by the computing transmission control unit 2 may perform collaborative computing.

In a possible design, the method provided in this embodiment of this application may further include S1105: The computing execution control unit sends computing parameter configuration information to the computing unit. Correspondingly, the computing unit receives the computing parameter configuration information from the computing execution control unit.

Optionally, the computing indication information indicates to request the first computing service, and the computing parameter configuration information may be determined by the computing execution control unit based on the computing indication information, second mapping information, and computing capability information.

It should be noted that, for a specific implementation of the second mapping information, refer to the corresponding descriptions in S1102. Details are not described herein again.

Optionally, the computing capability information includes a computing capability of one or more computing units.

For example, the computing execution control unit can determine, based on the first computing service and the correspondence between a computing service and a computing parameter, a computing parameter corresponding to the first computing service, to obtain the computing requirement information. The computing execution control unit may determine the computing parameter configuration information based on the computing requirement information and the computing capability information. For a specific implementation, refer to corresponding descriptions in S1004 that the computing parameter configuration information may be determined by the computing execution control unit based on the computing requirement information and the computing capability information. Details are not described herein again.

Optionally, if the computing indication information indicates the current computing parameter of the computing unit, the computing execution control unit may send computing parameter configuration information to the computing unit. The computing parameter configuration information may be the computing indication information, and the computing indication information is used as the computing parameter configuration information. Alternatively, the computing parameter configuration information may not be sent.

It should be noted that an execution sequence of S1105 is not limited in this application, and S1105 may be performed after S1101.

Optionally, S1104 may include: The computing unit performs computing processing based on the computing parameter configuration information and the transmission parameter configuration information. For a specific implementation, refer to the descriptions in S1006. Details are not described herein again.

Based on the communication method in FIG. 11, the computing execution control unit may obtain the computing indication information, where the computing indication information indicates the current computing parameter of the computing unit or indicates to request the first computing service. The computing execution control unit and the computing transmission control unit collaborate to obtain transmission parameter configuration information corresponding to the computing indication information, and send the transmission parameter configuration information to the computing unit, so that the computing unit can perform computing processing based on the transmission parameter configuration information. In this way, information is directly exchanged in computing control and communication control processes, for example, the computing transmission control unit and the computing unit directly exchange the transmission parameter configuration information or the like, and information does not need to be exchanged through an open interface. An interaction delay is small. This can resolve a problem that a wireless communication service and a computing service can be provided for a user only when a delay is large, thereby improving user experience.

For example, FIG. 12 is a schematic flowchart of still another communication method according to an embodiment of this application. A difference between FIG. 12 and FIG. 10 lies in that the method shown in FIG. 12 does not require a convergence orchestration unit to perform computing orchestration or communication orchestration. A difference between FIG. 12 and FIG. 11 lies in that FIG. 12 is applicable to a scenario in which a computing status is requested to be adjusted based on a current communication status.

As shown in FIG. 12, the communication method includes the following steps.

S1201: A computing transmission control unit obtains transmission indication information.

For example, the transmission indication information may indicate a current communication parameter of a computing unit.

For example, the transmission indication information may indicate a communication status of the computing unit, for example, an RRC status, a connection management (connection management, CM) status, a handover (handover, HO), a cell handover, a signal condition, such as reference signal received power (reference signal received power, RSRP) and reference signal received quality (reference signal received quality, RSRQ).

In a possible design, S1201 may include S1201a: The computing unit sends the transmission indication information to the computing transmission control unit. Correspondingly, the computing transmission control unit receives the transmission indication information from the computing unit.

To be specific, the computing unit may send the current communication parameter to the computing transmission control unit, to request to adjust a computing parameter.

For example, the computing unit that sends the transmission indication information to the computing transmission control unit may be a computing unit deployed on a terminal device. Optionally, the computing transmission control unit may be deployed on a core network, or deployed on an access network device.

In a possible design, the computing transmission control unit is a first computing transmission control unit. The method provided in this embodiment of this application may further include: The first computing transmission control unit sends the transmission indication information to a second computing transmission control unit. Correspondingly, the second computing transmission control unit receives the transmission indication information from the first computing transmission control unit.

For example, the first computing transmission control unit is a computing transmission control unit deployed on an access network device. After obtaining the transmission indication information, the first computing transmission control unit may send the transmission indication information to the second computing transmission control unit. For example, the second computing transmission control unit may be a computing transmission control unit deployed on a core network.

In another possible design, the computing transmission control unit is a second computing transmission control unit. S 1201 may include: A first computing transmission control unit sends the transmission indication information to the second computing transmission control unit. Correspondingly, the second computing transmission control unit receives the transmission indication information from the first computing transmission control unit.

To be specific, the computing transmission control unit (for example, the second computing transmission control unit) may obtain the transmission indication information from another computing transmission control unit (for example, the first computing transmission control unit).

It should be noted that, after obtaining the transmission indication information from the another computing transmission control unit, the computing transmission control unit may perform related steps of the computing transmission control unit in the method shown in FIG. 12.

In other words, the method shown in FIG. 12 may include that the first computing transmission control unit performs related steps of the computing transmission control unit in the method shown in FIG. 12, or may include that the second computing transmission control unit performs related steps of the computing transmission control unit in the method shown in FIG. 12. In this way, a computing parameter corresponding to the current communication parameter of the computing unit can be provided, to adjust computing based on a communication status.

S1202: The computing transmission control unit sends computing requirement information or the transmission indication information to a computing execution control unit. Correspondingly, the computing execution control unit receives the computing requirement information or the transmission indication information from the computing transmission control unit.

Optionally, it is assumed that there are two computing execution control units, a computing execution control unit 1 is deployed on a core network, a computing execution control unit 2 is deployed on an access network device, there are two computing transmission control units, a computing transmission control unit 1 is deployed on the core network, and a computing transmission control unit 2 is deployed on the access network device. The computing transmission control unit 1 sends the computing requirement information or the transmission indication information to the computing execution control unit 1, and the computing transmission control unit 2 sends the computing requirement information or the transmission indication information to the computing execution control unit 2.

Optionally, the computing execution control unit and the computing transmission control unit may interact with each other through a first logical interface, and the first logical interface uses a RESTful API interface specification. Refer to the corresponding descriptions in S1102. Details are not described herein again.

For example, the computing requirement information may indicate a computing requirement corresponding to the transmission indication information.

In other words, the computing transmission control unit may obtain the computing requirement information, and send the computing requirement information to the computing execution control unit.

Optionally, the computing requirement information includes a computing resource requirement, a computing quality of service requirement, and/or the like.

It should be noted that, for a specific implementation of the computing requirement information, refer to the corresponding descriptions in S1002. Details are not described herein again.

In some embodiments, the computing requirement information may be determined by the computing transmission control unit based on the transmission indication information and first mapping information.

For descriptions of the first mapping information, refer to the corresponding descriptions in S1102. Details are not described herein again.

For example, the computing transmission control unit may maintain the first mapping information, and the first mapping information may be preconfigured.

For example, the computing transmission control unit can determine, based on the current communication parameter of the computing unit indicated by the transmission indication information and the first mapping information, a computing parameter corresponding to the current transmission parameter of the computing unit, to obtain the computing requirement information.

Optionally, the computing transmission control unit may determine, based on a first correspondence, a computing execution control unit that manages a computing unit (for example, the computing unit that sends the transmission indication information in S1201a).

For example, the first correspondence includes a correspondence between a computing execution control unit and a computing transmission control unit. For example, the computing transmission control unit may maintain the first correspondence.

For example, the computing transmission control unit may determine, based on a correspondence between a computing execution control unit and a computing transmission control unit, a computing transmission control unit that manages a computing unit (for example, the computing unit that sends the computing indication information in S1101a). For example, a computing execution control unit corresponding to the computing transmission control unit is the determined computing transmission control unit that manages the computing unit.

For example, the computing transmission control unit sends the transmission indication information to the computing execution control unit.

To be specific, the computing transmission control unit may directly send the transmission indication information to the computing execution control unit. In this way, the computing execution control unit can obtain the corresponding computing requirement information based on the transmission indication information.

In some embodiments, the method provided in this application may further include: The computing execution control unit determines the computing requirement information based on the transmission indication information and first mapping information.

For example, the computing execution control unit may maintain the first mapping information, and the first mapping information may be preconfigured.

For example, the computing execution control unit can determine, based on the current communication parameter of the computing unit indicated by the transmission indication information and the first mapping information, a computing parameter corresponding to the current communication parameter of the computing unit, and use the computing parameter corresponding to the current communication parameter as the computing requirement information.

In other words, the computing requirement information may be determined by the computing execution control unit.

S1203: The computing execution control unit sends computing parameter configuration information to the computing unit. Correspondingly, the computing unit receives the computing parameter configuration information from the computing execution control unit.

Optionally, it is assumed that there are two computing execution control units, a computing execution control unit 1 is deployed on a core network, and a computing execution control unit 2 is deployed on an access network device. The computing execution control unit 1 may send corresponding computing parameter configuration information to a computing unit managed by the computing execution control unit 1, and the computing execution control unit 2 may send corresponding computing parameter configuration information to a computing unit managed by the computing execution control unit 2. A sequence is not limited.

For example, the computing parameter configuration information may indicate a computing parameter of the computing unit. For a specific implementation of the computing parameter configuration information, refer to corresponding descriptions in S 1004. Details are not described herein again.

In some embodiments, the computing parameter configuration information may be determined by the computing execution control unit based on the computing requirement information and computing capability information. For a specific implementation, refer to the corresponding descriptions in S1004. Details are not described herein again.

For example, the computing execution control unit can select at least one computing unit from the one or more computing units based on the computing requirement information and the computing capability of the one or more computing units, and determine computing parameter configuration information separately corresponding to the at least one computing unit.

The computing capability of the at least one computing unit can meet the computing requirement corresponding to the first computing service or the current communication parameter of the computing unit, and the computing parameter configuration information separately corresponding to the at least one computing unit can meet the computing requirement corresponding to the first computing service or the current communication status of the computing unit. The at least one computing unit may include the computing unit that sends the computing indication information, or may not include the computing unit that sends computing indication information.

S1204: The computing unit performs computing processing based on the computing parameter configuration information.

For example, the computing unit may perform computing based on the computing parameter configuration information, perform communication based on the current communication parameter of the computing unit, and may further perform collaborative computing with another computing unit.

Optionally, the computing unit managed by the computing execution control unit 1 and the computing unit managed by the computing execution control unit 2 may perform collaborative computing.

Based on the communication method in FIG. 12, the computing transmission control unit may obtain the transmission indication information, where the transmission indication information indicates the current communication parameter of the computing unit. The computing execution control unit and the computing transmission control unit collaborate to obtain computing parameter configuration information corresponding to the computing indication information, and send the computing parameter configuration information to the computing unit, so that the computing unit can perform computing processing based on the computing parameter configuration information. In this way, information is directly exchanged in computing control and communication control processes, for example, the computing execution control unit and the computing unit directly exchange the computing parameter configuration information or the like, and information does not need to be exchanged through an open interface. An interaction delay is small. This can resolve a problem that a wireless communication service and a computing service can be provided for a user only when a delay is large, thereby improving user experience.

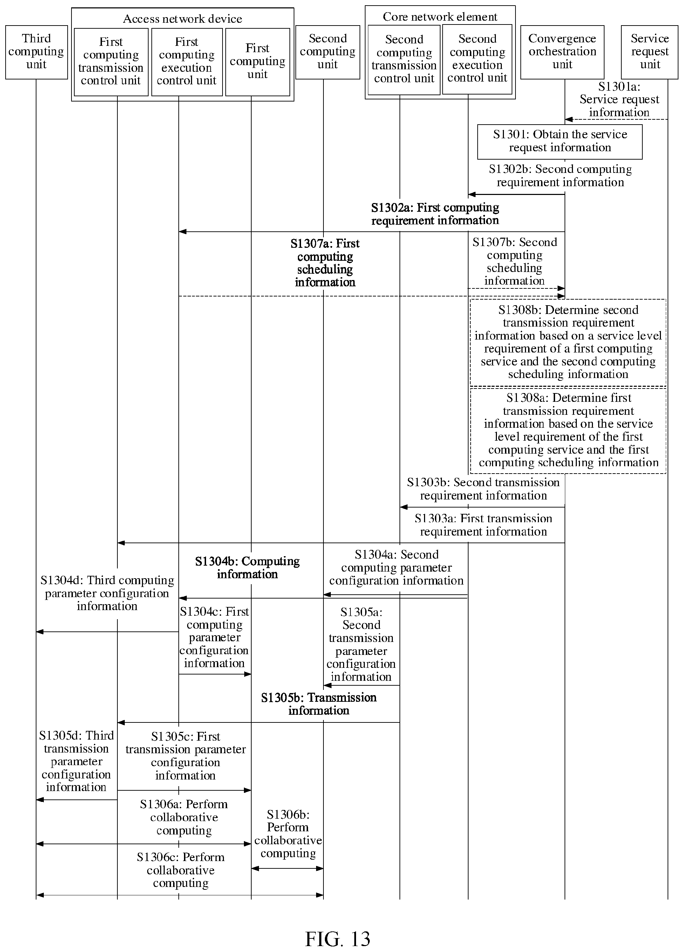

For example, FIG. 13 is a schematic flowchart of still another communication method according to an embodiment of this application. In FIG. 13, an example in which there are a plurality of computing execution control units (for example, the plurality of computing execution control units include a first computing execution control unit and a second computing execution control unit), there are a plurality of computing transmission control units (for example, the plurality of computing execution control units include a first computing transmission control unit and a second computing transmission control unit), there are a plurality of computing units (for example, the plurality of computing units include a first computing unit, a second computing unit, and a third computing unit), the first computing execution control unit is deployed on an access network device, the second computing execution control unit is deployed on a core network, the first computing transmission control unit is deployed on an access network device, the second computing transmission control unit is deployed on a core network, the first computing unit is deployed on an access network device, the second computing unit is deployed on a core network, and the third computing unit is deployed on a terminal device is used to describe the method shown FIG. 10. The second computing unit, the second computing execution control unit, and the second computing transmission control unit may belong to a same core network element, or may belong to different core network elements.

As shown in FIG. 13, the communication method includes the following steps.

S1301: A convergence orchestration unit obtains service request information.

In a possible design, S1301 may include S1301a: A service request unit sends the service request information to the convergence orchestration unit. Correspondingly, the convergence orchestration unit receives the service request information from the service request unit.

In some embodiments, the method provided in this embodiment of this application may further include step e: The convergence orchestration unit may determine first computing requirement information and second computing requirement information based on a service level requirement of a first computing service.

For example, the first computing requirement information is computing requirement information corresponding to an access network device, and the second computing requirement information is computing requirement information corresponding to a core network element.

In some other embodiments, the convergence orchestration unit may determine the first computing requirement information and the second computing requirement information in the manner recorded in step c and step d in S1005. Details are not described again in the method shown in FIG. 13.

In some embodiments, the method provided in this embodiment of this application may further include step f: The convergence orchestration unit may determine first transmission requirement information and second transmission requirement information based on the service level requirement of the first computing service.

For example, the first transmission requirement information is transmission requirement information corresponding to an access network device, and the second transmission requirement information is transmission requirement information corresponding to a core network element.

In some other embodiments, the convergence orchestration unit may determine the first transmission requirement information in a manner recorded in S1307a and S1308a, and determine the second transmission requirement information in a manner recorded in S1307b and S1308b.

It should be noted that for a specific implementation of S1301, refer to the corresponding descriptions in S1001; and for a specific implementation of S1301a, refer to the corresponding descriptions in S1001a. Details are not described herein again.

S1302a: The convergence orchestration unit sends the first computing requirement information to a first computing execution control unit of an access network device. Correspondingly, the first computing execution control unit of the access network device receives the first computing requirement information from the convergence orchestration unit.

S1302b: The convergence orchestration unit sends the second computing requirement information to a second computing execution control unit of a core network element. Correspondingly, the second computing execution control unit of the core network element receives the second computing requirement information from the convergence orchestration unit.

It should be noted that, for specific implementations of the first computing requirement information and the second computing requirement information, refer to the descriptions of the computing requirement information in S1002. For specific implementations of S1302a and S1302b, refer to the descriptions of the computing requirement information in S1002. A sequence of S1302a and S1302b is not limited in this application.

S1303a: The convergence orchestration unit sends the first transmission requirement information to a first computing transmission control unit of the access network device. Correspondingly, the first computing transmission control unit of the access network device receives the first transmission requirement information from the convergence orchestration unit.

S1303b: The convergence orchestration unit sends the second transmission requirement information to a second computing transmission control unit of the core network element. Correspondingly, the second computing transmission control unit of the core network element receives the second transmission requirement information from the convergence orchestration unit.

It should be noted that, for specific implementations of the first transmission requirement information and the second transmission requirement information, refer to the descriptions of the transmission requirement information in S1003. For specific implementations of S1303a and S1303b, refer to the descriptions of the computing requirement information in S1003. A sequence of S1303a and S1303b is not limited in this application.

S1304a: The second computing execution control unit of the core network element sends second computing parameter configuration information to a second computing unit. Correspondingly, the second computing unit receives the second computing parameter configuration information from the second computing execution control unit of the core network element.

S1304b: The second computing execution control unit of the core network element sends computing information to the first computing execution control unit of the access network device. Correspondingly, the first computing execution control unit of the access network device receives the computing information from the second computing execution control unit of the core network element.

Optionally, the computing information may include first computing parameter configuration information and third computing parameter configuration information. To be specific, the second computing execution control unit may determine the first computing parameter configuration information and the third computing parameter configuration information, and send the first computing parameter configuration information and the third computing parameter configuration information to the first computing execution control unit, and the first computing execution control unit sends the first computing parameter configuration information and the third computing parameter configuration information to a first computing unit and a third computing unit.

Alternatively, optionally, the computing information may include the second computing parameter configuration information. In this way, the first computing execution control unit of the access network device may determine computing parameter configurations of the first computing unit and the third computing unit based on an overall computing requirement, a second computing parameter configuration allocated to the second computing unit, and computing capabilities (computing capabilities of the first computing unit and the third computing unit).

S1304c: The first computing execution control unit of the access network device sends the first computing parameter configuration information to the first computing unit of the access network device. Correspondingly, the first computing unit of the access network device receives the first computing parameter configuration information from the first computing execution control unit of the access network device.

S1304d: The first computing execution control unit of the access network device sends the third computing parameter configuration information to the third computing unit. Correspondingly, the third computing unit receives the third computing parameter configuration information from the first computing execution control unit of the access network device.

It should be noted that for specific implementations of the first computing parameter configuration information, the second computing parameter configuration information, and the third computing parameter configuration information, refer to the descriptions of the computing parameter configuration information in S1004. An execution sequence of S1304c and S1304d is not limited in this application.

In a possible design, the method provided in this application may further include S1307a and S1308a. S1307a: The first computing execution control unit of the access network device sends first computing scheduling information to the convergence orchestration unit. Correspondingly, the convergence orchestration unit receives the first computing scheduling information from the first computing execution control unit of the access network device.

S1308a: The convergence orchestration unit determines the first transmission requirement information based on the service level requirement of the first computing service and the first computing scheduling information.

It should be noted that, for specific implementations of S1307a and S1308a, refer to the descriptions of S1007 and S1008.

It should be noted that, when the method provided in this application includes S1307a and S1308a, S1303a may be performed after S1308a.

In a possible design, the method provided in this application may further include S1307b and S1308b. S1307b: The second computing execution control unit of the core network element sends second computing scheduling information to the convergence orchestration unit. Correspondingly, the convergence orchestration unit receives the second computing scheduling information from the second computing execution control unit of the core network element.

S1308b: The convergence orchestration unit determines the second transmission requirement information based on the service level requirement of the first computing service and the second computing scheduling information.

It should be noted that, for specific implementations of S1307b and S1308b, refer to the descriptions of S1007 and S1008.

It should be noted that, when the method provided in this application includes S1307b and S1308b, S1303b may be performed after S1308b. A sequence of S1307a and S1307b is not limited in this application.

S1305a: The second computing transmission control unit of the core network element sends second transmission parameter configuration information to the second computing unit. Correspondingly, the second computing unit receives the second transmission parameter configuration information from the second computing transmission control unit of the core network element.

S1305b: The second computing transmission control unit of the core network element sends transmission information to the first computing transmission control unit of the access network device. Correspondingly, the first computing transmission control unit of the access network device receives the transmission information from the second computing transmission control unit of the core network element.

Optionally, the transmission information may include first transmission parameter configuration information and third transmission parameter configuration information. To be specific, the second computing transmission control unit may determine the first transmission parameter configuration information and the third transmission parameter configuration information, and send the first transmission parameter configuration information and the third transmission parameter configuration information to the first computing transmission control unit, and the first computing transmission control unit sends the first transmission parameter configuration information and the third transmission parameter configuration information to the first computing unit and the third computing unit.

Alternatively, optionally, the transmission information may include the second transmission parameter configuration information. In this way, the first computing transmission control unit of the access network device may determine transmission parameter configurations of the first computing unit and the third computing unit based on an overall communication requirement, a second transmission parameter configuration allocated to the second computing unit, and communication capabilities (communication capabilities of the first computing unit and the third computing unit).

S1305c: The first computing transmission control unit of the access network device sends the first transmission parameter configuration information to the first computing unit of the access network device. Correspondingly, the first computing unit of the access network device receives the first transmission parameter configuration information from the first computing transmission control unit of the access network device.

S1305d: The first computing transmission control unit of the access network device sends the third transmission parameter configuration information to the third computing unit. Correspondingly, the third computing unit receives the third transmission parameter configuration information from the first computing transmission control unit of the access network device.

It should be noted that for specific implementations of the first transmission parameter configuration information, the second transmission parameter configuration information, and the third transmission parameter configuration information, refer to the descriptions of the transmission parameter configuration information in S1005. For specific implementations of S1305a, S1305b, and S1305c, refer to the descriptions of S1005. An execution sequence of S1305a, S1305b, and S1305c is not limited in this application.

S1306a: The first computing unit of the access network device and the third computing unit perform collaborative computing.

For example, the first computing unit of the access network device performs collaborative computing based on the first computing parameter configuration information and the first transmission parameter configuration information, and the third computing unit performs collaborative computing based on the third computing parameter configuration information and the third transmission parameter configuration information.

S1306b: The first computing unit of the access network device and the second computing unit perform collaborative computing.

For example, the first computing unit of the access network device performs collaborative computing based on the first computing parameter configuration information and the first transmission parameter configuration information, and the second computing unit performs collaborative computing based on the second computing parameter configuration information and the second transmission parameter configuration information.

S1306c: The third computing unit and the second computing unit perform collaborative computing.

For example, the first computing unit of the access network device performs collaborative computing based on the first computing parameter configuration information and the first transmission parameter configuration information, and the third computing unit performs collaborative computing based on the third computing parameter configuration information and the third transmission parameter configuration information.

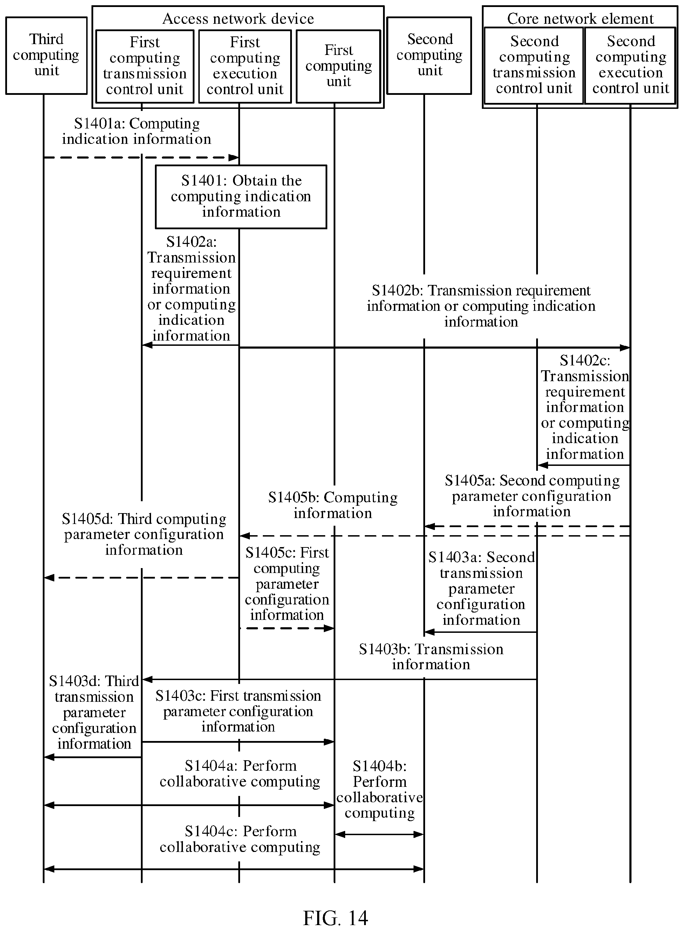

For example, FIG. 14 is a schematic flowchart of another communication method according to an embodiment of this application. In FIG. 14, an example in which there are a plurality of computing execution control units (for example, the plurality of computing execution control units include a first computing execution control unit and a second computing execution control unit), there are a plurality of computing transmission control units (for example, the plurality of computing execution control units include a first computing transmission control unit and a second computing transmission control unit), there are a plurality of computing units (for example, the plurality of computing units include a first computing unit, a second computing unit, and a third computing unit), the first computing execution control unit is deployed on an access network device, the second computing execution control unit is deployed on a core network, the first computing transmission control unit is deployed on an access network device, the second computing transmission control unit is deployed on a core network, the first computing unit is deployed on an access network device, the second computing unit is deployed on a core network, and the third computing unit is deployed on a terminal device is used to describe the method shown FIG. 11.

As shown in FIG. 14, the communication method includes the following steps.

S1401: A first computing execution control unit of an access network device obtains computing indication information.

In a possible design, S1401 may include S1401a: A third computing unit sends the computing indication information to the first computing execution control unit of the access network device. Correspondingly, the first computing execution control unit of the access network device receives the computing indication information from the third computing unit.

It should be noted that, for a specific implementation of the computing indication information, refer to the descriptions of the computing indication information in S1101. For a specific implementation of S1401, refer to the descriptions of S1101. Details are not described herein again.

S1402a: The first computing execution control unit of the access network device sends transmission requirement information or the computing indication information to a first computing transmission control unit of the access network device. Correspondingly, the first computing transmission control unit of the access network device receives the transmission requirement information or the computing indication information from the first computing execution control unit of the access network device.

S1402b: The first computing execution control unit of the access network device sends the transmission requirement information or the computing indication information to a second computing execution control unit of a core network element. Correspondingly, the second computing execution control unit of the core network element receives the transmission requirement information or the computing indication information from the first computing execution control unit of the access network device.

Optionally, S1402b may be an optional step. If the access network device can meet a current computing status by controlling communication parameters adjusted by a first computing unit and the third computing unit, S1402b may not be performed. FIG. 14 is described by using an example in which S1402b is performed.

S1402c: The second computing execution control unit of the core network element sends the transmission requirement information or the computing indication information to a second computing transmission control unit of the core network element. Correspondingly, the second computing transmission control unit of the core network element receives the transmission requirement information or the computing indication information from the second computing execution control unit of the core network element.

It should be noted that, for specific implementations of S1402a, S1402b, and S1402c, refer to the descriptions of S1102. Details are not described herein again.

S1403a: The second computing transmission control unit of the core network element sends second transmission parameter configuration information to a second computing unit. Correspondingly, the second computing unit receives the second transmission parameter configuration information from the second computing transmission control unit of the core network element.

S1403b: The second computing transmission control unit of the core network element sends transmission information to the first computing transmission control unit of the access network device. Correspondingly, the first computing transmission control unit of the access network device receives the transmission information from the second computing transmission control unit of the core network element.

Optionally, the transmission information may include first transmission parameter configuration information and third transmission parameter configuration information. To be specific, the second computing transmission control unit may determine the first transmission parameter configuration information and the third transmission parameter configuration information, and send the first transmission parameter configuration information and the third transmission parameter configuration information to the first computing transmission control unit, and the first computing transmission control unit sends the first transmission parameter configuration information and the third transmission parameter configuration information to the first computing unit and the third computing unit.

Alternatively, optionally, the transmission information may include the second transmission parameter configuration information. In this way, the first computing transmission control unit of the access network device may determine transmission parameter configurations of the first computing unit and the third computing unit based on an overall communication requirement, a second transmission parameter configuration allocated to the second computing unit, and communication capabilities (communication capabilities of the first computing unit and the third computing unit).

S1403c: The first computing transmission control unit of the access network device sends the first transmission parameter configuration information to the first computing unit of the access network device. Correspondingly, the first computing unit of the access network device receives the first transmission parameter configuration information from the first computing transmission control unit of the access network device.

S1403d: The first computing transmission control unit of the access network device sends the third transmission parameter configuration information to the third computing unit. Correspondingly, the third computing unit receives the third transmission parameter configuration information from the first computing transmission control unit of the access network device.

It should be noted that for specific implementations of the first transmission parameter configuration information, the second transmission parameter configuration information, and the third transmission parameter configuration information, refer to the descriptions of the transmission parameter configuration information in S1005. For specific implementations of S1403a, S1403c, and S1403d, refer to the descriptions of S1103. An execution sequence of S1403c and S1403d is not limited in this application.

S1404a: The first computing unit of the access network device and the third computing unit perform collaborative computing.

For example, the first computing unit of the access network device performs collaborative computing based on a current computing parameter of the first computing unit and the first transmission parameter configuration information, and the third computing unit performs collaborative computing based on a current computing parameter of the third computing unit and the third transmission parameter configuration information.

S1404b: The first computing unit of the access network device and the second computing unit perform collaborative computing.

For example, the first computing unit of the access network device performs collaborative computing based on the current computing parameter of the first computing unit and the first transmission parameter configuration information, and the second computing unit performs collaborative computing based on a current computing parameter of the second computing unit and the second transmission parameter configuration information.

S1404c: The third computing unit and the second computing unit perform collaborative computing.

For example, the first computing unit of the access network device performs collaborative computing based on a current computing parameter of the first computing unit and the first transmission parameter configuration information, and the third computing unit performs collaborative computing based on a current computing parameter of the third computing unit and the third transmission parameter configuration information.

In a possible design, the method provided in this embodiment of this application may further include S1405a to S1405d.

S1405a: The second computing execution control unit of the core network element sends second computing parameter configuration information to the second computing unit. Correspondingly, the second computing unit receives the second computing parameter configuration information from the second computing execution control unit of the core network element.

S1405b: The second computing execution control unit of the core network element sends computing information to the first computing execution control unit of the access network device. Correspondingly, the first computing execution control unit of the access network device receives the computing information from the second computing execution control unit of the core network element.

Optionally, the computing information may include first computing parameter configuration information and third computing parameter configuration information. To be specific, the second computing execution control unit may determine the first computing parameter configuration information and the third computing parameter configuration information, and send the first computing parameter configuration information and the third computing parameter configuration information to the first computing execution control unit, and the first computing execution control unit sends the first computing parameter configuration information and the third computing parameter configuration information to a first computing unit and a third computing unit.

Alternatively, optionally, the computing information may include the second computing parameter configuration information. In this way, the first computing execution control unit of the access network device may determine computing parameter configurations of the first computing unit and the third computing unit based on an overall computing requirement, a second computing parameter configuration allocated to the second computing unit, and computing capabilities (computing capabilities of the first computing unit and the third computing unit).

S1405c: The first computing execution control unit of the access network device sends the first computing parameter configuration information to the first computing unit of the access network device. Correspondingly, the first computing unit of the access network device receives the first computing parameter configuration information from the first computing execution control unit of the access network device.

S1405d: The first computing execution control unit of the access network device sends the third computing parameter configuration information to the third computing unit. Correspondingly, the third computing unit receives the third computing parameter configuration information from the first computing execution control unit of the access network device.

It should be noted that for specific implementations of the first computing parameter configuration information, the second computing parameter configuration information, and the third computing parameter configuration information, refer to the descriptions of the computing parameter configuration information in S1105. For specific implementations of S1405a, S1405b, S1405c, and S1405d, refer to the descriptions of the computing parameter configuration information in S1105. An execution sequence of S1405c and S1405d is not limited in this application.

Optionally, for specific implementations of S1404a to S1404c, refer to the descriptions of S306a to S1306c. Details are not described herein again.

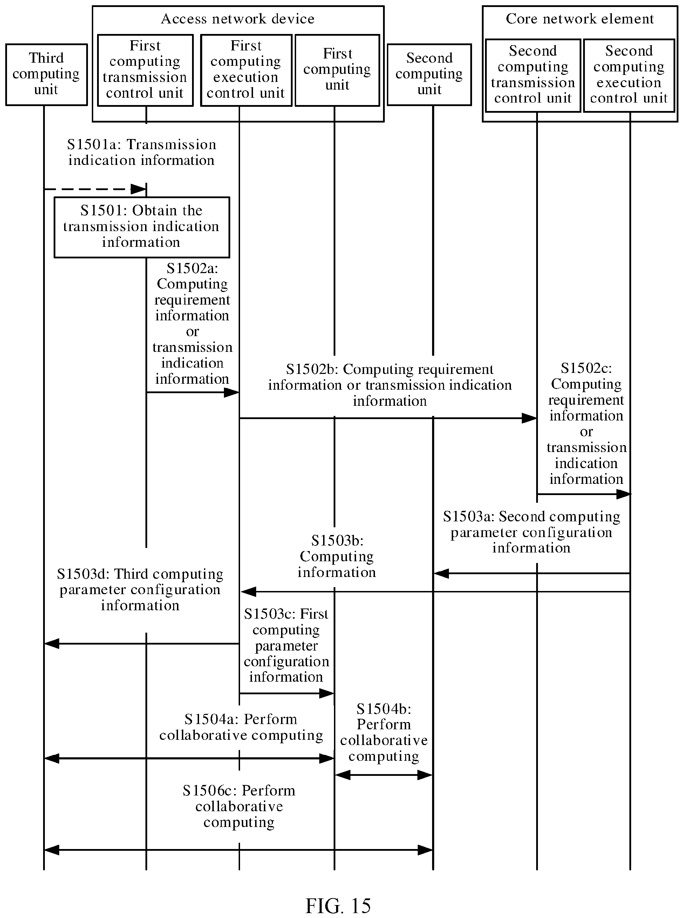

For example, FIG. 15 is a schematic flowchart of still another communication method according to an embodiment of this application. In FIG. 15, an example in which there are a plurality of computing execution control units (for example, the plurality of computing execution control units include a first computing execution control unit and a second computing execution control unit), there are a plurality of computing transmission control units (for example, the plurality of computing execution control units include a first computing transmission control unit and a second computing transmission control unit), there are a plurality of computing units (for example, the plurality of computing units include a first computing unit, a second computing unit, and a third computing unit), the first computing execution control unit is deployed on an access network device, the second computing execution control unit is deployed on a core network, the first computing transmission control unit is deployed on an access network device, the second computing transmission control unit is deployed on a core network, the first computing unit is deployed on an access network device, the second computing unit is deployed on a core network, and the third computing unit is deployed on a terminal device is used to describe the method shown FIG. 12.

As shown in FIG. 15, the communication method includes the following steps.

S1501: A first computing transmission control unit of an access network device obtains transmission indication information.

In a possible design, S1501 may include S1501a: A third computing unit sends the transmission indication information to the first computing transmission control unit of the access network device. Correspondingly, the first computing transmission control unit of the access network device receives the transmission indication information from the third computing unit.

It should be noted that, for a specific implementation of the transmission indication information, refer to the descriptions of the transmission indication information in S1201. For a specific implementation of S1501, refer to the descriptions of S1201. Details are not described herein again.

S1502a: The first computing transmission control unit of the access network device sends computing requirement information or the transmission indication information to a first computing execution control unit of the access network device. Correspondingly, the first computing execution control unit of the access network device receives the computing requirement information or the transmission indication information from the first computing transmission control unit of the access network device.

S1502b: The first computing transmission control unit of the access network device sends the computing requirement information or the transmission indication information to a second computing transmission control unit of a core network element. Correspondingly, the second computing transmission control unit of the core network element receives the computing requirement information or the transmission indication information from the first computing transmission control unit of the access network device.

Optionally, S1502b may be an optional step. If the access network device can meet a current communication status by controlling computing parameters adjusted by a first computing unit and the third computing unit, S1502b may not be performed. FIG. 15 is described by using an example in which S1502b is performed.

S1502c: The second computing transmission control unit of the core network element sends the computing requirement information or the transmission indication information to a second computing execution control unit of the core network element. Correspondingly, the second computing execution control unit of the core network element receives the computing requirement information or the transmission indication information from the second computing transmission control unit of the core network element.

It should be noted that, for specific implementations of S1502a and S1502b, refer to the descriptions of S1202. Details are not described herein again.

S1503a: The second computing execution control unit of the core network element sends second computing parameter configuration information to a second computing unit. Correspondingly, the second computing unit receives the second computing parameter configuration information from the computing execution control unit.

S1503b: The second computing execution control unit of the core network element sends computing information to the first computing execution control unit of the access network device. Correspondingly, the first computing execution control unit of the access network device receives the computing information from the second computing execution control unit of the core network element.

Optionally, the computing information may include first computing parameter configuration information and third computing parameter configuration information. To be specific, the second computing execution control unit may determine the first computing parameter configuration information and the third computing parameter configuration information, and send the first computing parameter configuration information and the third computing parameter configuration information to the first computing execution control unit, and the first computing execution control unit sends the first computing parameter configuration information and the third computing parameter configuration information to a first computing unit and a third computing unit.

Alternatively, optionally, the computing information may include the second computing parameter configuration information. In this way, the first computing execution control unit of the access network device may determine computing parameter configurations of the first computing unit and the third computing unit based on an overall computing requirement, a second computing parameter configuration allocated to the second computing unit, and computing capabilities (computing capabilities of the first computing unit and the third computing unit).

S1503c: The first computing execution control unit of the access network device sends the first computing parameter configuration information to the first computing unit of the access network device. Correspondingly, the first computing unit of the access network device receives the first computing parameter configuration information from the first computing execution control unit of the access network device.

S1503d: The first computing execution control unit of the access network device sends the third computing parameter configuration information to the third computing unit. Correspondingly, the third computing unit receives the third computing parameter configuration information from the first computing execution control unit of the access network device.

It should be noted that for specific implementations of the first computing parameter configuration information, the second computing parameter configuration information, and the third computing parameter configuration information, refer to the descriptions of the computing parameter configuration information in S1105. For specific implementations of S1503a, S1503c, and S1503d, refer to the descriptions of S1203. An execution sequence of S1503c and S1503d is not limited in this application.

S1504a: The first computing unit of the access network device and the third computing unit perform collaborative computing.

For example, the first computing unit of the access network device performs collaborative computing based on the first computing parameter configuration information, and the third computing unit performs collaborative computing based on the third computing parameter configuration information.

S1504b: The first computing unit of the access network device and the second computing unit of the core network element perform collaborative computing.

For example, the first computing unit of the access network device performs collaborative computing based on the first computing parameter configuration information, and the second computing unit of the core network element performs collaborative computing based on the second computing parameter configuration information.

S1504c: The third computing unit and the second computing unit of the core network element perform collaborative computing.

For example, the first computing unit of the access network device performs collaborative computing based on the first computing parameter configuration information, and the third computing unit performs collaborative computing based on the third computing parameter configuration information.

In this application, unless otherwise specified, for same or similar parts in embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

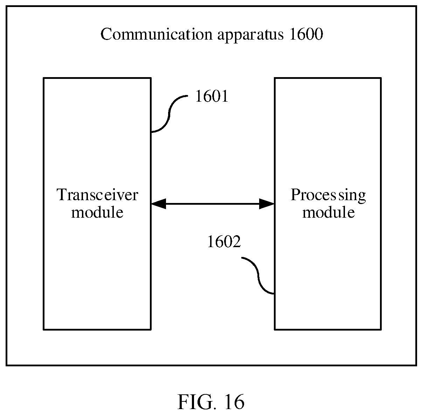

With reference to FIG. 1 to FIG. 12, the foregoing describes in detail the communication methods provided in embodiments of this application. The following describes in detail a communication apparatus provided in an embodiment of this application with reference to FIG. 16.

For example, FIG. 16 is a schematic of a structure of another communication apparatus according to an embodiment of this application. The communication apparatus may be used in the communication systems shown in FIG. 1 and FIG. 2. For ease of description, FIG. 16 shows only main components of the communication apparatus. As shown in FIG. 16, the communication apparatus 1600 includes a transceiver module 1601 and a processing module 1602.

In a possible design scheme, the communication apparatus 1600 shown in FIG. 16 is applicable to the systems shown in FIG. 1 and FIG. 2, and performs functions of the convergence orchestration unit in the communication methods shown in FIG. 10 and FIG. 13.

The processing module 1602 is configured to obtain service request information. The transceiver module 1601 is configured to send computing requirement information to a computing execution control unit. The transceiver module 1601 is further configured to send transmission requirement information to a computing transmission control unit. The service request information is for requesting a first computing service, the computing requirement information indicates a computing requirement corresponding to the first computing service, and the transmission requirement information indicates a communication requirement corresponding to the first computing service.

It should be noted that all related content of the steps in the foregoing method embodiments may be cited in function descriptions of corresponding functional modules. Details are not described herein again.

It should be noted that the transceiver module 1601 may include a receiving module and a sending module (not shown in FIG. 16), which is not specifically limited.

Optionally, the communication apparatus 1600 may further include a storage module (not shown in FIG. 16), and the storage module stores a program or instructions. When the processing module 1602 executes the program or the instructions, the communication apparatus 1600 can perform functions of the convergence orchestration unit in the communication methods shown in FIG. 10 and FIG. 13.

It should be noted that the communication apparatus 1600 may be a convergence orchestration unit, or may be a chip (system) or another part or component that may be disposed in the convergence orchestration unit. This is not limited in this application.

In addition, for technical effects of the communication apparatus 1600, refer to the technical effects of the communication methods shown in FIG. 10 and FIG. 13. Details are not described herein again.

In another possible design scheme, the communication apparatus 1600 shown in FIG. 16 is applicable to the systems shown in FIG. 1 and FIG. 2, and performs functions of the computing execution control unit in the communication methods shown in FIG. 10, FIG. 12, FIG. 13, and FIG. 15.

The processing module 1602 is configured to obtain computing requirement information. The transceiver module 1601 is configured to send computing parameter configuration information to a computing unit. The computing requirement information indicates a computing requirement corresponding to a first computing service, and the computing parameter configuration information indicates a computing parameter of the computing unit.

It should be noted that all related content of the steps in the foregoing method embodiments may be cited in function descriptions of corresponding functional modules. Details are not described herein again.

It should be noted that the transceiver module 1601 may include a receiving module and a sending module (not shown in FIG. 16), which is not specifically limited.

Optionally, the communication apparatus 1600 may further include a storage module (not shown in FIG. 16), and the storage module stores a program or instructions. When the processing module 1602 executes the program or the instructions, the communication apparatus 1600 can perform functions of the computing execution control unit in the communication methods shown in FIG. 10, FIG. 12, FIG. 13, and FIG. 15.

It should be noted that the communication apparatus 1600 may be a computing execution control unit, or may be a chip (system) or another part or component that may be disposed in the computing execution control unit. This is not limited in this application.

In addition, for technical effects of the communication apparatus 1600, refer to the technical effects of the communication methods shown in FIG. 10, FIG. 12, FIG. 13, and FIG. 15. Details are not described herein again.

In still another possible design scheme, the communication apparatus 1600 shown in FIG. 16 is applicable to the systems shown in FIG. 1 and FIG. 2, and performs functions of the computing transmission control unit in the communication methods in FIG. 10, FIG. 11, FIG. 13, and FIG. 14.

The processing module 1602 is configured to obtain transmission requirement information. The transceiver module 1601 is configured to send transmission parameter configuration information to a computing unit. The transmission requirement information indicates a communication requirement corresponding to a first computing service, and the transmission parameter configuration information indicates a communication parameter of the computing unit.

It should be noted that all related content of the steps in the foregoing method embodiments may be cited in function descriptions of corresponding functional modules. Details are not described herein again.

It should be noted that the transceiver module 1601 may include a receiving module and a sending module (not shown in FIG. 16), which is not specifically limited.

Optionally, the communication apparatus 1600 may further include a storage module (not shown in FIG. 16), and the storage module stores a program or instructions. When the processing module 1602 executes the program or the instructions, the communication apparatus 1600 can perform functions of the computing transmission control unit in the communication methods shown in FIG. 10, FIG. 11, FIG. 13, and FIG. 14.

It should be noted that the communication apparatus 1600 may be a computing transmission control unit, or may be a chip (system) or another part or component that may be disposed in the computing transmission control unit. This is not limited in this application.

In addition, for technical effects of the communication apparatus 1600, refer to the technical effects of the communication methods shown in FIG. 10, FIG. 11, FIG. 13, and FIG. 14. Details are not described herein again.

In still another possible design scheme, the communication apparatus 1600 shown in FIG. 16 is applicable to the systems shown in FIG. 1 and FIG. 2, and performs functions of the computing execution control unit in the communication methods shown in FIG. 11 and FIG. 14.

The processing module 1602 is configured to obtain computing indication information. The transceiver module 1601 is configured to send transmission requirement information or the computing indication information to a computing transmission control unit. The computing indication information indicates to request a first computing service, or indicates a current computing parameter of a computing unit, and the transmission requirement information indicates a communication requirement corresponding to the computing indication information.

It should be noted that all related content of the steps in the foregoing method embodiments may be cited in function descriptions of corresponding functional modules. Details are not described herein again.

It should be noted that the transceiver module 1601 may include a receiving module and a sending module (not shown in FIG. 16), which is not specifically limited.

Optionally, the communication apparatus 1600 may further include a storage module (not shown in FIG. 16), and the storage module stores a program or instructions. When the processing module 1602 executes the program or the instructions, the communication apparatus 1600 can perform functions of the computing execution control unit in the communication methods shown in FIG. 11 and FIG. 14.

It should be noted that the communication apparatus 1600 may be a computing execution control unit, or may be a chip (system) or another part or component that may be disposed in the computing execution control unit. This is not limited in this application.

In addition, for technical effects of the communication apparatus 1600, refer to the technical effects of the communication methods shown in FIG. 11 and FIG. 14. Details are not described herein again.

In still another possible design scheme, the communication apparatus 1600 shown in FIG. 16 is applicable to the systems shown in FIG. 1 and FIG. 2, and performs functions of the computing transmission control unit in the communication methods shown in FIG. 12 and FIG. 15.

The processing module 1602 is configured to obtain transmission indication information. The transceiver module 1601 is configured to send computing requirement information or the transmission indication information to a computing execution control unit. The transmission indication information indicates a current communication parameter of a computing unit, and the computing requirement information indicates a computing requirement corresponding to the transmission indication information.

It should be noted that all related content of the steps in the foregoing method embodiments may be cited in function descriptions of corresponding functional modules. Details are not described herein again.

It should be noted that the transceiver module 1601 may include a receiving module and a sending module (not shown in FIG. 16), which is not specifically limited.

Optionally, the communication apparatus 1600 may further include a storage module (not shown in FIG. 16), and the storage module stores a program or instructions. When the processing module 1602 executes the program or the instructions, the communication apparatus 1600 can perform functions of the computing transmission control unit in the communication methods shown in FIG. 12 and FIG. 15.

It should be noted that the communication apparatus 1600 may be a computing transmission control unit, or may be a chip (system) or another part or component that may be disposed in the computing transmission control unit. This is not limited in this application.

In addition, for technical effects of the communication apparatus 1600, refer to the technical effects of the communication methods shown in FIG. 12 and FIG. 15. Details are not described herein again.

In still another possible design scheme, the communication apparatus 1600 shown in FIG. 16 is applicable to the systems shown in FIG. 1 and FIG. 2, and performs functions of the computing unit in the communication methods shown in FIG. 10 to FIG. 15.

The transceiver module 1601 is configured to receive computing parameter configuration information from a computing execution control unit. The transceiver module 1601 is further configured to receive transmission parameter configuration information from a computing transmission control unit. The processing module 1602 is configured to perform computing processing based on the computing parameter configuration information and the transmission parameter configuration information. The computing parameter configuration information indicates a computing parameter of the communication apparatus, and the transmission parameter configuration information indicates a corresponding communication parameter of the communication apparatus.

It should be noted that all related content of the steps in the foregoing method embodiments may be cited in function descriptions of corresponding functional modules. Details are not described herein again.

It should be noted that the transceiver module 1601 may include a receiving module and a sending module (not shown in FIG. 16), which is not specifically limited.

Optionally, the communication apparatus 1600 may further include a storage module (not shown in FIG. 16), and the storage module stores a program or instructions. When the processing module 1602 executes the program or the instructions, the communication apparatus 1600 can perform functions of the computing unit in the communication methods shown in FIG. 10 to FIG. 15.

It should be noted that the communication apparatus 1600 may be a computing unit, or may be a chip (system) or another part or component that may be disposed in the computing unit. This is not limited in this application.

In addition, for technical effects of the communication apparatus 1600, refer to the technical effects of the communication methods shown in FIG. 10 to FIG. 15. Details are not described herein again.

An embodiment of this application provides a communication system. The communication system includes a computing execution control unit and a computing transmission control unit, and may further include a computing unit, a convergence orchestration unit, and/or a service request unit. The computing execution control unit is configured to perform actions of the computing execution control unit in the foregoing method embodiments. The computing transmission control unit is configured to perform actions of the computing transmission control unit in the foregoing method embodiments. The convergence orchestration unit is configured to perform actions of the convergence orchestration unit in the foregoing method embodiments. The computing unit is configured to perform actions of the computing unit in the foregoing method embodiments. The service request network element is configured to perform actions of the service request network element in the foregoing method embodiments. For a specific execution method and process, refer to the foregoing method embodiments. Details are not described herein again.

Alternatively, the communication system includes a convergence scheduling unit and a convergence anchor, and may further include a convergence orchestration unit, a computing unit, and/or a service request unit. The convergence scheduling unit is configured to perform actions of the computing execution control unit and the computing transmission control unit in the foregoing method embodiments. The convergence anchor is configured to perform actions of the computing transmission control unit and the computing transmission control unit in the foregoing method embodiments. The convergence orchestration unit is configured to perform actions of the convergence orchestration unit in the foregoing method embodiments. The computing unit is configured to perform actions of the computing unit in the foregoing method embodiments. The service request network element is configured to perform actions of the service request network element in the foregoing method embodiments. For a specific execution method and process, refer to the foregoing method embodiments. Details are not described herein again.

An embodiment of this application provides a chip system. The chip system includes a logic circuit. The logic circuit may be configured to implement a processing function related to the communication method provided in embodiments of this application. The chip system further includes an input/output port. The input/output port may be configured for receiving and sending functions in the communication method provided in embodiments of this application.

For example, the input port may be configured to implement a receiving function related to the communication method provided in embodiments of this application, and the output port may be configured to implement a sending function related to the communication method provided in embodiments of this application.

In a possible design, the chip system further includes a memory, and the memory is configured to store program instructions and data for implementing a function related to the communication method provided in embodiments of this application.

The chip system may include a chip, or may include a chip and another discrete component.

An embodiment of this application provides a computer-readable storage medium. The computer-readable storage medium stores a computer program or instructions. When the computer program or the instructions are run on a computer, the communication method provided in embodiments of this application is performed.

An embodiment of this application provides a computer program product. The computer program product includes a computer program or instructions. When the computer program or the instructions are run on a computer, the communication method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. For details, refer to the context for understanding.

In this application, at least one means one or more, and a plurality of means two or more. "At least one item (piece) of the following" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, comprising:
obtaining, by a convergence orchestration unit, service request information, wherein the service request information is for requesting a first computing service;
sending, by the convergence orchestration unit, computing requirement information to a computing execution control unit, wherein the computing requirement information indicates a computing requirement corresponding to the first computing service; and
sending, by the convergence orchestration unit, transmission requirement information to a computing transmission control unit, wherein the transmission requirement information indicates a communication requirement corresponding to the first computing service.

2. The communication method according to claim 1, wherein the method further comprises:
receiving, by the convergence orchestration unit, computing scheduling information from the computing execution control unit, wherein the computing scheduling information comprises computing parameter configuration information separately corresponding to at least one computing unit and an identifier of the at least one computing unit; and
determining, by the convergence orchestration unit, the transmission requirement information based on a service level requirement of the first computing service and the computing scheduling information.

3. The communication method according to claim 2, wherein the computing parameter configuration information comprises a configuration of a computing resource and/or a configuration of computing quality of service, the configuration of the computing resource comprises a size of the computing resource and/or a storage size, and the configuration of the computing quality of service comprises one or more of the following: a computing processing mode, computing processing precision, and computing processing time.

4. The communication method according to claim 2 or 3, wherein any one of the at least one computing unit is deployed on a terminal device, an access network device, or a core network.

5. The communication method according to any one of claims 1 to 4, wherein the convergence orchestration unit is a core network element.

6. The communication method according to any one of claims 1 to 5, wherein the computing execution control unit is a computing management function or a computing resource control function, and the computing transmission control unit is a session management function or a radio resource control function.

7. The communication method according to any one of claims 1 to 6, wherein a convergence anchor comprises the computing execution control unit and the computing transmission control unit, and the convergence anchor is a core network element.

8. The communication method according to any one of claims 1 to 7, wherein a convergence scheduling unit comprises the computing execution control unit and the computing transmission control unit, and the convergence scheduling unit is deployed on an access network device.

9. The communication method according to any one of claims 1 to 8, wherein the computing requirement information comprises a computing resource requirement and/or a computing quality of service requirement, and the computing quality of service requirement comprises one or more of the following: a computing processing mode requirement, a computing processing precision requirement, and a computing processing time requirement.

10. The communication method according to any one of claims 1 to 9, wherein the transmission requirement information comprises a communication resource requirement and/or a communication quality of service requirement, and the communication quality of service requirement comprises a bandwidth requirement and/or a delay requirement.

11. A communication method, comprising:
obtaining, by a computing execution control unit, computing requirement information, wherein the computing requirement information indicates a computing requirement corresponding to a first computing service; and
sending, by the computing execution control unit, computing parameter configuration information to a computing unit, wherein the computing parameter configuration information indicates a computing parameter of the computing unit.

12. The communication method according to claim 11, wherein the obtaining, by a computing execution control unit, computing requirement information comprises:
receiving, by the computing execution control unit, the computing requirement information from a convergence orchestration unit; or
receiving, by the computing execution control unit, the computing requirement information from a computing transmission control unit.

13. The communication method according to claim 11, wherein the obtaining, by a computing execution control unit, computing requirement information comprises:
receiving, by the computing execution control unit, transmission indication information from a computing transmission control unit, wherein the transmission indication information indicates a current communication parameter of the computing unit; and
determining, by the computing execution control unit, the computing requirement information based on the transmission indication information and first mapping information, wherein the first mapping information indicates a correspondence between a computing parameter and a communication parameter.

14. The communication method according to claim 12 or 13, wherein the computing execution control unit is a computing management function or a computing resource control function, and the computing transmission control unit is a session management function or a radio resource control function.

15. The communication method according to any one of claims 12 to 14, wherein a convergence anchor comprises the computing execution control unit and the computing transmission control unit, and the convergence anchor is a core network element.

16. The communication method according to any one of claims 12 to 15, wherein a convergence scheduling unit comprises the computing execution control unit and the computing transmission control unit, and the convergence scheduling unit is deployed on an access network device.

17. The communication method according to any one of claims 11 to 16, wherein the computing unit is deployed on a terminal device, an access network device, or a core network.

18. The communication method according to any one of claims 11 to 17, wherein the computing parameter configuration information is determined by the computing execution control unit based on the computing requirement information and computing capability information, and the computing capability information comprises a computing capability of one or more computing units.

19. The communication method according to any one of claims 11 to 18, wherein the method further comprises:
sending, by the computing execution control unit, computing scheduling information to the convergence orchestration unit, wherein the computing scheduling information comprises computing parameter configuration information separately corresponding to at least one computing unit and an identifier of the at least one computing unit.

20. The communication method according to any one of claims 11 to 19, wherein the computing requirement information comprises a computing resource requirement and/or a computing quality of service requirement, and the computing quality of service requirement comprises one or more of the following: a computing processing mode requirement, a computing processing precision requirement, and a computing processing time requirement.

21. The communication method according to any one of claims 11 to 20, wherein the computing parameter configuration information comprises a configuration of a computing resource and/or a configuration of computing quality of service, the configuration of the computing resource comprises a size of the computing resource and/or a storage size, and the configuration of the computing quality of service comprises one or more of the following: a computing processing mode, computing processing precision, and computing processing time.

22. A communication method, comprising:
obtaining, by a computing transmission control unit, transmission requirement information, wherein the transmission requirement information indicates a communication requirement corresponding to a first computing service; and
sending, by the computing transmission control unit, transmission parameter configuration information to a computing unit, wherein the transmission parameter configuration information indicates a communication parameter of the computing unit.

23. The communication method according to claim 22, wherein the obtaining, by a computing transmission control unit, transmission requirement information comprises:
receiving, by the computing transmission control unit, the transmission requirement information from a convergence orchestration unit; or
receiving, by the computing transmission control unit, the transmission requirement information from a computing execution control unit.

24. The communication method according to claim 22, wherein the obtaining, by a computing transmission control unit, transmission requirement information comprises:
receiving, by the computing transmission control unit, computing indication information from a computing execution control unit, wherein the computing indication information indicates a current computing parameter of the computing unit; and
determining, by the computing transmission control unit, the transmission requirement information based on the computing indication information and first mapping information, wherein the first mapping information indicates a correspondence between a computing parameter and a communication parameter.

25. The communication method according to claim 22, wherein the obtaining, by a computing transmission control unit, transmission requirement information comprises:
receiving, by the computing transmission control unit, computing indication information from a computing execution control unit, wherein the computing indication information indicates to request the first computing service; and
determining, by the computing transmission control unit, the transmission requirement information based on the computing indication information, first mapping information, and second mapping information, wherein the first mapping information indicates a correspondence between a computing parameter and a communication parameter, and the second mapping information indicates a correspondence between a computing service and a computing parameter.

26. The communication method according to any one of claims 23 to 25, wherein the computing execution control unit is a computing management function or a computing resource control function, and the computing transmission control unit is a session management function or a radio resource control function.

27. The communication method according to any one of claims 23 to 26, wherein a convergence anchor comprises the computing execution control unit and the computing transmission control unit, and the convergence anchor is a core network element.

28. The communication method according to any one of claims 23 to 27, wherein a convergence scheduling unit comprises the computing execution control unit and the computing transmission control unit, and the convergence scheduling unit is deployed on an access network device.

29. The communication method according to any one of claims 22 to 28, wherein the computing unit is deployed on a terminal device, an access network device, or a core network.

30. The communication method according to any one of claims 22 to 29, wherein the transmission parameter configuration information is determined by the computing transmission control unit based on the transmission requirement information and transmission capability information, and the transmission capability information comprises a communication capability of one or more computing units.

31. The communication method according to any one of claims 22 to 30, wherein the transmission requirement information comprises a communication resource requirement and/or a communication quality of service requirement, and the communication quality of service requirement comprises a bandwidth requirement and/or a delay requirement.

32. The communication method according to any one of claims 22 to 31, wherein the transmission parameter configuration information comprises a configuration of a communication resource and/or a configuration of communication quality of service, the configuration of the communication resource comprises a size of the communication resource, and the configuration of the communication quality of service comprises bandwidth and/or a delay.

33. A communication method, comprising:
receiving, by a computing unit, computing parameter configuration information from a computing execution control unit, wherein the computing parameter configuration information indicates a computing parameter of the computing unit;
receiving, by the computing unit, transmission parameter configuration information from a computing transmission control unit, wherein the transmission parameter configuration information indicates a corresponding communication parameter of the computing unit; and
performing, by the computing unit, computing processing based on the computing parameter configuration information and the transmission parameter configuration information.

34. The communication method according to claim 33, wherein the computing unit is deployed on a terminal device, an access network device, or a core network.

35. The communication method according to claim 33 or 34, wherein the computing execution control unit is a computing management function or a computing resource control function, and the computing transmission control unit is a session management function or a radio resource control function.

36. The communication method according to any one of claims 33 to 35, wherein a convergence anchor comprises the computing execution control unit and the computing transmission control unit, and the convergence anchor is a core network element.

37. The communication method according to any one of claims 33 to 36, wherein a convergence scheduling unit comprises the computing execution control unit and the computing transmission control unit, and the convergence scheduling unit is deployed on an access network device.

38. The communication method according to any one of claims 33 to 37, wherein the computing parameter configuration information comprises a configuration of a computing resource and/or a configuration of computing quality of service, the configuration of the computing resource comprises a size of the computing resource and/or a storage size, and the configuration of the computing quality of service comprises one or more of the following: a computing processing mode, computing processing precision, and computing processing time.

39. The communication method according to any one of claims 33 to 38, wherein the transmission parameter configuration information comprises a configuration of a communication resource and/or a configuration of communication quality of service, the configuration of the communication resource comprises a size of the communication resource, and the configuration of the communication quality of service comprises bandwidth and/or a delay.

40. The communication method according to any one of claims 33 to 39, wherein the method further comprises:
sending, by the computing unit, service request information to a convergence orchestration unit, wherein the service request information is for requesting a first computing service.

41. The communication method according to any one of claims 33 to 40, wherein the method further comprises:
sending, by the computing unit, computing indication information to the computing execution control unit, wherein the computing indication information indicates to request a first computing service or indicates a current computing parameter of the computing unit.

42. The communication method according to any one of claims 33 to 39, wherein the method further comprises:
sending, by the computing unit, transmission indication information to the computing transmission control unit, wherein the transmission indication information indicates a current communication parameter of the computing unit.

43. A communication apparatus, wherein the communication apparatus comprises a transceiver module and a processing module, wherein
the processing module is configured to obtain service request information, wherein the service request information is for requesting a first computing service;
the transceiver module is configured to send computing requirement information to a computing execution control unit, wherein the computing requirement information indicates a computing requirement corresponding to the first computing service; and
the transceiver module is further configured to send transmission requirement information to a computing transmission control unit, wherein the transmission requirement information indicates a communication requirement corresponding to the first computing service.

44. The communication apparatus according to claim 43, wherein
the transceiver module is further configured to receive computing scheduling information from the computing execution control unit, wherein the computing scheduling information comprises computing parameter configuration information separately corresponding to at least one computing unit and an identifier of the at least one computing unit; and
the processing module is further configured to determine the transmission requirement information based on a service level requirement of the first computing service and the computing scheduling information.

45. The communication apparatus according to claim 44, wherein the computing parameter configuration information comprises a configuration of a computing resource and/or a configuration of computing quality of service, the configuration of the computing resource comprises a size of the computing resource and/or a storage size, and the configuration of the computing quality of service comprises one or more of the following: a computing processing mode, computing processing precision, and computing processing time.

46. The communication apparatus according to claim 44 or 45, wherein any one of the at least one computing unit is deployed on a terminal device, an access network device, or a core network.

47. The communication apparatus according to any one of claims 43 to 46, wherein the communication apparatus is a core network element.

48. The communication apparatus according to any one of claims 43 to 47, wherein the computing execution control unit is a computing management function or a computing resource control function, and the computing transmission control unit is a session management function or a radio resource control function.

49. The communication apparatus according to any one of claims 43 to 48, wherein a convergence anchor comprises the computing execution control unit and the computing transmission control unit, and the convergence anchor is a core network element.

50. The communication apparatus according to any one of claims 43 to 49, wherein a convergence scheduling unit comprises the computing execution control unit and the computing transmission control unit, and the convergence scheduling unit is deployed on an access network device.

51. The communication apparatus according to any one of claims 43 to 50, wherein the computing requirement information comprises a computing resource requirement and/or a computing quality of service requirement, and the computing quality of service requirement comprises one or more of the following: a computing processing mode requirement, a computing processing precision requirement, and a computing processing time requirement.

52. The communication apparatus according to any one of claims 43 to 51, wherein the transmission requirement information comprises a communication resource requirement and/or a communication quality of service requirement, and the communication quality of service requirement comprises a bandwidth requirement and/or a delay requirement.

53. A communication apparatus, wherein the communication apparatus comprises a transceiver module and a processing module, wherein
the processing module is configured to obtain computing requirement information, wherein the computing requirement information indicates a computing requirement corresponding to a first computing service; and
the transceiver module is configured to send computing parameter configuration information to a computing unit, wherein the computing parameter configuration information indicates a computing parameter of the computing unit.

54. The communication apparatus according to claim 53, wherein
the transceiver module is further configured to receive the computing requirement information from a convergence orchestration unit; or
the transceiver module is further configured to receive the computing requirement information from a computing transmission control unit.

55. The communication apparatus according to claim 53, wherein
the transceiver module is further configured to receive transmission indication information from a computing transmission control unit, wherein the transmission indication information indicates a current communication parameter of the computing unit; and
the processing module is further configured to determine the computing requirement information based on the transmission indication information and first mapping information, wherein the first mapping information indicates a correspondence between a computing parameter and a communication parameter.

56. The communication apparatus according to claim 54 or 55, wherein the communication apparatus is a computing management function or a computing resource control function, and the computing transmission control unit is a session management function or a radio resource control function.

57. The communication apparatus according to any one of claims 54 to 56, wherein a convergence anchor comprises the communication apparatus and the computing transmission control unit, and the convergence anchor is a core network element.

58. The communication apparatus according to any one of claims 54 to 57, wherein a convergence scheduling unit comprises the communication apparatus and the computing transmission control unit, and the convergence scheduling unit is deployed on an access network device.

59. The communication apparatus according to any one of claims 53 to 58, wherein the computing unit is deployed on a terminal device, an access network device, or a core network.

60. The communication apparatus according to any one of claims 53 to 59, wherein the computing parameter configuration information is determined by the communication apparatus based on the computing requirement information and computing capability information, and the computing capability information comprises a computing capability of one or more computing units.

61. The communication apparatus according to any one of claims 53 to 60, wherein
the transceiver module is further configured to send computing scheduling information to the convergence orchestration unit, wherein the computing scheduling information comprises computing parameter configuration information separately corresponding to at least one computing unit and an identifier of the at least one computing unit.

62. The communication apparatus according to any one of claims 53 to 61, wherein the computing requirement information comprises a computing resource requirement and/or a computing quality of service requirement, and the computing quality of service requirement comprises one or more of the following: a computing processing mode requirement, a computing processing precision requirement, and a computing processing time requirement.

63. The communication apparatus according to any one of claims 53 to 62, wherein the computing parameter configuration information comprises a configuration of a computing resource and/or a configuration of computing quality of service, the configuration of the computing resource comprises a size of the computing resource and/or a storage size, and the configuration of the computing quality of service comprises one or more of the following: a computing processing mode, computing processing precision, and computing processing time.

64. A communication apparatus, wherein the communication apparatus comprises a transceiver module and a processing module, wherein
the processing module is configured to obtain transmission requirement information, wherein the transmission requirement information indicates a communication requirement corresponding to a first computing service; and
the transceiver module is configured to send transmission parameter configuration information to a computing unit, wherein the transmission parameter configuration information indicates a communication parameter of the computing unit.

65. The communication apparatus according to claim 64, wherein
the transceiver module is further configured to receive the transmission requirement information from a convergence orchestration unit; or
the transceiver module is further configured to receive the transmission requirement information from a computing execution control unit.

66. The communication apparatus according to claim 64, wherein
the transceiver module is further configured to receive computing indication information from a computing execution control unit, wherein the computing indication information indicates a current computing parameter of the computing unit; and
the processing module is further configured to determine the transmission requirement information based on the computing indication information and first mapping information, wherein the first mapping information indicates a correspondence between a computing parameter and a communication parameter.

67. The communication apparatus according to claim 64, wherein
the transceiver module is further configured to receive computing indication information from a computing execution control unit, wherein the computing indication information indicates to request the first computing service; and
the processing module is further configured to determine the transmission requirement information based on the computing indication information, first mapping information, and second mapping information, wherein the first mapping information indicates a correspondence between a computing parameter and a communication parameter, and the second mapping information indicates a correspondence between a computing service and a computing parameter.

68. The communication apparatus according to any one of claims 65 to 67, wherein the computing execution control unit is a computing management function or a computing resource control function, and the communication apparatus is a session management function or a radio resource control function.

69. The communication apparatus according to any one of claims 65 to 68, wherein a convergence anchor comprises the computing execution control unit and the communication apparatus, and the convergence anchor is a core network element.

70. The communication apparatus according to any one of claims 65 to 69, wherein a convergence scheduling unit comprises the computing execution control unit and the communication apparatus, and the convergence scheduling unit is deployed on an access network device.

71. The communication apparatus according to any one of claims 64 to 70, wherein the computing unit is deployed on a terminal device, an access network device, or a core network.

72. The communication apparatus according to any one of claims 64 to 71, wherein the transmission parameter configuration information is determined by the communication apparatus based on the transmission requirement information and transmission capability information, and the transmission capability information comprises a communication capability of one or more computing units.

73. The communication apparatus according to any one of claims 64 to 72, wherein the transmission requirement information comprises a communication resource requirement and/or a communication quality of service requirement, and the communication quality of service requirement comprises a bandwidth requirement and/or a delay requirement.

74. The communication apparatus according to any one of claims 64 to 73, wherein the transmission parameter configuration information comprises a configuration of a communication resource and/or a configuration of communication quality of service, the configuration of the communication resource comprises a size of the communication resource, and the configuration of the communication quality of service comprises bandwidth and/or a delay.

75. A communication apparatus, wherein the communication apparatus comprises a transceiver module and a processing module, wherein
the transceiver module is configured to receive computing parameter configuration information from a computing execution control unit, wherein the computing parameter configuration information indicates a computing parameter of the communication apparatus;
the transceiver module is further configured to receive transmission parameter configuration information from a computing transmission control unit, wherein the transmission parameter configuration information indicates a corresponding communication parameter of the communication apparatus; and
the processing module is configured to perform computing processing based on the computing parameter configuration information and the transmission parameter configuration information.

76. The communication apparatus according to claim 75, wherein the communication apparatus is deployed on a terminal device, an access network device, or a core network.

77. The communication apparatus according to claim 75 or 76, wherein the computing execution control unit is a computing management function or a computing resource control function, and the computing transmission control unit is a session management function or a radio resource control function.

78. The communication apparatus according to any one of claims 75 to 77, wherein a convergence anchor comprises the computing execution control unit and the computing transmission control unit, and the convergence anchor is a core network element.

79. The communication apparatus according to any one of claims 75 to 78, wherein a convergence scheduling unit comprises the computing execution control unit and the computing transmission control unit, and the convergence scheduling unit is deployed on an access network device.

80. The communication apparatus according to any one of claims 75 to 79, wherein the computing parameter configuration information comprises a configuration of a computing resource and/or a configuration of computing quality of service, the configuration of the computing resource comprises a size of the computing resource and/or a storage size, and the configuration of the computing quality of service comprises one or more of the following: a computing processing mode, computing processing precision, and computing processing time.

81. The communication apparatus according to any one of claims 75 to 80, wherein the transmission parameter configuration information comprises a configuration of a communication resource and/or a configuration of communication quality of service, the configuration of the communication resource comprises a size of the communication resource, and the configuration of the communication quality of service comprises bandwidth and/or a delay.

82. The communication apparatus according to any one of claims 75 to 81, wherein
the transceiver module is further configured to send service request information to a convergence orchestration unit, wherein the service request information is for requesting a first computing service.

83. The communication apparatus according to any one of claims 75 to 82, wherein
the transceiver module is further configured to send computing indication information to the computing execution control unit, wherein the computing indication information indicates to request a first computing service or indicates a current computing parameter of the communication apparatus.

84. The communication apparatus according to any one of claims 75 to 81, wherein
the transceiver module is further configured to send transmission indication information to the computing transmission control unit, wherein the transmission indication information indicates a current communication parameter of the communication apparatus.

85. A communication apparatus, wherein the communication apparatus comprises a unit or a module configured to perform the method according to any one of claims 1 to 42.

86. A communication apparatus, wherein the communication apparatus comprises a processor, and the processor is configured to perform the communication method according to any one of claims 1 to 42.

87. A communication system, wherein the communication system comprises the communication apparatus according to any one of claims 53 to 63 and the communication apparatus according to any one of claims 64 to 74.

88. The communication system according to claim 87, wherein the communication system further comprises: the communication apparatus according to any one of claims 43 to 52, and/or the communication apparatus according to any one of claims 75 to 84.

89. A chip system, wherein the chip system comprises a logic circuit, and the logic circuit is configured to perform the communication method according to any one of claims 1 to 42.

90. A computer-readable storage medium, wherein the computer-readable storage medium stores a computer program or instructions; and when the computer program or the instructions are run on a computer, the communication method according to any one of claims 1 to 42 is performed.

91. A computer program product, wherein the computer program product comprises a computer program or instructions; and when the computer program or the instructions are run on a computer, the communication method according to any one of claims 1 to 42 is performed.
